# EUROPÄISCHE PATENTSCHRIFT

(11) **EP 2 389 403 B1**
(45) Veröffentlichungstag und Bekanntmachung des Hinweises auf die Patenterteilung: **04.04.2018**
(21) Anmeldenummer: 10700947.4
(22) Anmeldetag: 13.01.2010
(51) Int. Cl.: C08G 18/10, C08G 18/42, C08G 18/18, C08G 18/79, C08G 18/80, C08G 18/66

(54) **POLYURETHANVERGUSSMASSEN**
CASTINGS BASED ON POLYURETHANE
MASSES À COULER DE POLYURETHANE

(30) Priorität: 22.01.2009 DE 102009005712
(43) Veröffentlichungstag der Anmeldung: 30.11.2011
(73) Patentinhaber: Covestro Deutschland AG, 51373 Leverkusen (DE)
(72) Erfinder: GRESZTA-FRANZ, Dorota, 42659 Solingen (DE); LAAS, Hans-Josef, 51519 Odenthal (DE); KRAUSE, Jens, 26540 Mours Saint Eusebe (FR); MAGER, Dieter, 51373 Leverkusen (DE); WAMPRECHT, Christian, 41472 Neuss (DE)
(74) Vertreter: Levpat
(86) Internationale Anmeldenummer: PCT/EP2010/000125
(87) Internationale Veröffentlichungsnummer: WO 2010/083957

(56) Entgegenhaltungen:
- EP-A1- 1 721 920
- EP-A2- 0 330 966
- EP-A2- 0 336 205
- EP-A2- 0 496 208

## Beschreibung

Die Herstellung lichtechter Polyurethan- oder Polyurethanharnstoffelastomere unter Verwendung aliphatischer und/oder cycloaliphatischer Polyisocyanate ist bekannt.

Für eine Reihe unterschiedlicher Anwendungen, beispielsweise zur Herstellung von Bauteilen für Automobil- oder Möbelanwendungen, als Dichtungsmassen z. B. für die Scheibenverkapselung oder als Vergussmassen für elektronische oder optoelektronische Bauteile, besteht heute im Markt ein zunehmendes Interesse an flexiblen, licht- und wetterbeständigen Polyurethan- und Polyurethanharnstoffmassen.

Die Herstellung von elastischen lichtechten Polyurethan- bzw. Polyurethanharnstoffelastomeren wurde bereits mehrfach beschrieben. In der Regel kommen dabei als Polyisocyanatkomponenten die großtechnisch verfügbaren aliphatischen und/oder cycloaliphatischen Diisocyanate, wie z. B. 1,6-Diisocyanatohexan (HDI), 1-Isocyanato-3,3,5-trimethyl-5-isocyanatomethylcyclohexan (Isophorondiisocyanat, IPDI) und/oder 2,4'- und/oder 4,4'-Diisocyanatodicyclohexylmethan (H₁₂-MDI) oder oligomere Derivate dieser Diisocyanate zum Einsatz.

WO 1998/014492 beschreibt beispielsweise ein reaktives Spritzgussverfahren (reaction injection moulding, RIM) zur Herstellung gegebenenfalls geschäumter, lichtechter, flexibler oder halbflexibler Polyurethanelastomere, bei dem ein monomeres IPDI enthaltendes IPDI-Rohtrimerisat, das zusätzlich bis zu 10 Gew.-% eines IPDI-Prepolymers und gegebenenfall bis zu 5 Gew.-% weiterer monomerer Diisocyanate enthalten kann, mit einer Kombination aus polymeren Polyetherpoylolen, hydroxyfunktionellen niedermolekularen Kettenverlängerern und einer aminischen Initiatorkomponente in Gegenwart von Organometallverbindungen als Katalysatoren umgesetzt wird.

Elastische, lichtbeständige, gegebenenfalls geschäumte Polyurethan-Formteile lassen sich gemäß der Lehre der EP-A 0 275 010 auch unter Verwendung von Abmischungen monomerenarmer HDI-Trimerisate oder HDI/IPDI-Mischtrimerisate mit mindestens 10 Gew.-% monomeren Isophorondiisocyanates als Polyisocyanatkomponente und gegenüber Isocyanatgruppen mindestens difunktionell reagierenden Reaktionspartnern herstellen.

Beiden Verfahren gemeinsam ist der Nachteil, dass sie mit grossen Mengen niedermolekularer monomerer Diisocyanate arbeiten, die als giftige Arbeitsstoffe eingestuft sind und zum Teil einen erheblichen Dampfdruck aufweisen. Die Verarbeitung dieser monomeren Diisocyanate erfordert aus Gründen der Arbeitshygiene einen sehr hohen sicherheitstechnischen Aufwand. Darüberhinaus besteht die Möglichkeit, dass insbesondere bei Verwendung eines Polyisocyanatüberschusses, wie z. B. in EP-A 0 275 010 vorgeschlagen, nicht abreagiertes monomeres Diisocyanat für längere Zeit im hergestellten Formteil verbleibt und aus diesem langsam ausdampfen kann.

Es hat nicht an Versuchen gefehlt, elastische lichtechte Polyurethanmassen auf Basis monomerenarmer höhermolekularer, physiologisch unbedenklicher Polyisocyanate, insbesondere solcher auf Basis der bekannten aliphatischen Polyisocyanate mit Biuret-, Isocyanurat- oder Uretdionstruktur, herzustellen.

WO 2007/107210 beschreibt vernetzte weichelastische Polyurethanmassen, die beispielsweise als Silikonersatz bei der Herstellung von Dichtungen Verwendung finden. Diese Polyurethane bestehen aus Gemischen polymerer Diole und Triole sowie bis zu 50 Gew.-% spezieller monofunktioneller Verbindungen als "innerem Weichmacher", die vorzugsweise mit monomerenarmen mindestens trifunktionellen aliphatischen Polyisocyanaten, beispielsweise Trimerisaten des HDI ausgehärtet werden. Die als innere Weichmacher verwendeten Monoalkohole, wie z. B. N-Hydroxyalkyl-substituierte aromatische Sulfonsäureester oder -amide oder auch monofunktionelle Polyetheralkohole, verleihen der Polyurethanmasse zwar eine permanente Elastizität und verhindern eine Versprödung des Materials, da sie chemisch fest eingebaut sind und nicht aus dem Formteil migrieren können, reduzieren aber gleichzeitig in erheblichem Maße die Isocyanatfunktionalität und damit die Netzwerkdichte, was sich unter anderem negativ auf die Beständigkeit gegenüber Lösemitteln und Chemikalien auswirkt.

Ähnliches gilt für die in der EP-A 0 026 123 beschriebenen stark untervernetzten Polyurethane, wie sie sich durch Umsetzung mehrfach funktioneller Polyole mit monomerenarmen Polyisocyanaten, beispielsweise HDI-Biureten, in einem Äquivalentverhältnis von Isocyanat- zu Hydroxylgruppen von 0,2 bis 0,6 erhalten lassen. Derart untervernetzte Polyurethanmassen sind extrem weich, im allgemeinen klebrig und zur Herstellung von Formteilen ungeeignet. Sie finden als Zwischenschicht oder Kleber bei der Herstellung von mehrschichtigen Glas-, Glas/Kunststoff- oder Kunststoffverbundplatten, z. B. für Sicherheitsgläser, Verwendung.

Aufgabe der vorliegenden Erfindung war es nun, neue weiche und elastische, licht- und wetterbeständige Polyurethan- bzw. Polyharnstoffelastomere zur Verfügung zu stellen, die nicht die Nachteile der bekannten elastischen Polyurethanmassen aufweisen. Die neuen Elastomermassen sollten auf toxikologisch unbedenklichen Rohstoffen basieren und sich nach üblichen Methoden, beispielsweise durch einfaches Vergießen von Hand oder mit Hilfe geeigneter Maschinen, beispielsweise nach dem RIM-Verfahren, zu hochvernetzten, gleichzeitig aber weichen und flexiblen Formkörpern verarbeiten lassen.

Diese Aufgabe konnte durch die Bereitstellung der nachfolgend näher beschriebenen Polyurethane bzw. Polyurethanharnstoffe gelöst werden.

Die nachfolgend näher beschriebene Erfindung basiert auf der überraschenden Beobachtung, dass sich unter Verwendung spezieller hochfunktioneller monomerarmer Polyisocyanatkomponenten, in denen neben Isocyanuratstrukturen Estergruppen aufweisende Polyolkomponenten über Allophanatstrukturen eingebaut vorliegen, hochelastische licht- und wetterbeständige Polyurethan- und/oder Polyharnstoffmassen herstellen lassen, die sich durch eine hervorragende Beständigkeit gegenüber chemischer, mechanischer und themischer Belastung auszeichnen.

Isocyanurat- und gleichzeitig Allophanatgruppen enthaltende HDI-Polyisocyanate wurden zwar bereits in EP-A 0 659 792 und CA-A 2 219 693 neben anderen als mögliche Ausgangskomponenten zur Herstellung von Polyurethanformteilen durch ein Reaktionsspritzgussverfahren beschrieben. Bei diesen handelt es sich jedoch um die aus EP-A 0 496 208, EP-A 0 524 500 und EP-A 0 524 501 bekannten niedrigviskosen und niedrigfunktionellen, aus einfachen Monoalkoholen, wie z. B. n-Butanol, und HDI herstellbaren Allophanat- und Isocyanuratgruppen enthaltende Polyisocyanate und nicht um Allophanat-Trimerisate auf Basis Estergruppen enthaltender höherfunktioneller Alkohole, wie sie erfindungsgemäß zur Herstellung von Vergussmassen eingesetzt werden. Den beiden genannten Veröffentlichungen ist keinerlei konkreter Hinweis auf die besondere Eignung von HDI-Polyisocyanuraten, in denen Estergruppen aufweisende Polyole über Allophanatstrukturen eingebaut vorliegen, zur Herstellung flexibler Polyurethan- und/oder Polyharnstoffinassen zu entnehmen.

Gegenstand der vorliegenden Erfindung ist die Verwendung monomerarmer Polyisocyanatkomponenten A), die durch Umsetzung von 1,6-Diisocyanatohexan mit molar unterschüssigen Mengen einer Estergruppen aufweisenden hydroxyfunktionellen Komponente B) in Gegenwart von Katalysatoren C), die die Allophanatisierung und gleichzeitig die Oligomerisierung von Isocyanatgruppen beschleunigen, Abbruch der Reaktion bei einem gewünschten Umsatzgrad und Entfernung des nicht umgesetzten Diisocyanatüberschusses erhältlich sind, zur Bereitstellung von Polyurethan- und/oder Polyharnstoff-Massen, die zur Herstellung von lichtechten kompakten oder geschäumten Körper aus Polyurethan- und/oder Polyharnstoff verwendet werden können.

Gegenstand der Erfindung ist auch ein Verfahren zur Herstellung lichtechter Körper aus diesen Polyurethan- und/oder Polyharnstoff-Massen durch lösemittelfreie Umsetzung von
A) der vorstehend beschriebenen Polyisocyanatkomponente, gegebenenfalls gemeinsam mit
D) weiteren monomerarmen aliphatischen und/oder cycloaliphatischen Polyisocyanaten mit
E) gegenüber Isocyanatgruppen reaktiven Reaktionspartnern einer mittleren Funktionalität von 2,0 bis 6,0 und gegebenenfalls unter Mitverwendung
F) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

Bei der zur Herstellung der neuen lichtechten Körper aus diesen Polyurethan- oder Polyharnstoffmassen eingesetzten Polyisocyanatkomponente A) handelt es sich um beliebige an sich bekannte monomerarme Allophanat- und Isocyanuratstrukturen enthaltende Umsetzungsprodukte von HDI mit Estergruppen enthaltenden hydroxyfunktionellen Komponenten B), wie sie beispielsweise nach dem in EP-A 0 336 205 offengelegten Verfahren erhältlich sind.

EP-A-1721920 offenbart eine Polyisocyanatkomponente, die durch Umsetzung von HDI und IPDI mit molar unterschüssigen Mengen einer Polyesterpolyol Komponente in Gegenwart von Tetramethylammoniumcapriat als Allophanat- und Isocyanurat- Katalysator, Abbruch der Reaktion und Entfernung des nicht umgesetzten Diisocyanatüberschusses hergestellt wird. Diese wird zur Herstellung von Polyurethan-Körpern verwendet.

Geeignete Polyole B) zur Herstellung der Polyisocyanatkomponente A) sind insbesondere solche, die ein mittleres, aus Funktionalität und Hydroxylzahl berechenbares Molekulargewicht von 134 bis 3000, vorzugsweise 176 bis 2000, und eine mittlere OH-Funktionalität von 1,8 bis 4,0, vorzugsweise von 2,0 bis 3,0, aufweisen.

Hierbei handelt es sich beispielsweise um einfache Esteralkohole, wie z. B. Hydroxypivalinsäureneopentylglykolester, oder um die an sich bekannten Esteralkohole oder Esteralkohol-Gemische, wie sie sich z.B. durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Esteralkohole B) geeignete mehrwertige Alkohole sind insbesondere solche des Molekulargewichtsbereiches 62 bis 400, wie z. B. 1,2-Ethandiol, 1,2- und 1,3-Propandiol, die isomeren Butandiole, Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis-(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat.

Die zur Herstellung der Esteralkohole B) verwendeten Säuren oder Säurederivate können aliphatischer, cycloaliphatischer, aromatischer und/oder heteroaromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereiches 118 bis 300 oder deren Derivate wie beispielsweise Bernsteinsäure, Adipinsäure, Sebacinsäure, Phthalsäure, Phthalsäureanhydrid, Isophthalsäure, Terephthalsäure, Trimellithsäure, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Esteralkohole B) können auch Gemische der beispielhaft genannten Ausgangsverbindungen eingesetzt werden. Weiterhin ist es möglich beim erfindungsgemäßen Verfahren Gemische verschiedener Esteralkohole der genannten Art zu verwenden.

Bevorzugt kommen zur Herstellung der Polyisocyanatkomponente A) Esterpolyole B) zum Einsatz, wie sie sich in an sich bekannter Weise aus Lactonen und einfachen mehrwertigen Alkoholen als Startermolekülen unter Ringöffnung herstellen lassen.

Geeignete Lactone zur Herstellung dieser Esterpolyole sind beispielsweise β-Propiolacton, γ-Butyrolacton, δ-Valerolacton, ε-Caprolacton, 3,5,5- und 3,3,5-Trimethylcaprolacton oder beliebige Gemische solcher Lactone. Als Startermoleküle dienen beispielsweise die oben beispielhaft genannten mehrwertigen Alkohole des Molekulargewichtsbereichs 62 bis 400 oder beliebige Gemische dieser Alkohole.

Die Herstellung solcher Lactonpolyesterpolyole durch ringöffnende Polymerisation erfolgt im allgemeinen in Gegenwart von Katalysatoren wie beispielsweise Lewis- oder Brönstedt-Säuren, organischen Zinn- oder Titanverbindungen bei Temperaturen von 20 bis 200°C, vorzugsweise 50 bis 200°C.

Besonders bevorzugte Estergruppen aufweisende hydroxyfunktionelle Komponenten B) sind Esterdiole des obengenannten Molekulargewichtsbereiches, insbesondere solche auf Basis von ε-Caprolacton.

Gegebenenfalls können bei der Herstellung der Polyisocyanatkomponente A) in untergeordneter Menge auch Estergruppen-freie Hydroxylverbindungen des Molekulargewichtsbereiches 32 bis 400 mitverwendet werden. Hierbei handelt es sich beispielsweise um einfache Monoalkohole, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol und Tetrahydrofurfurylalkohol, oder die oben als geeignete Ausgangskomponenten zur Herstellung der Esteralkohole B) beschriebenen mehrwertigen Alkohole oder beliebige Gemische dieser Alkohole. Solche Estergruppen-freie Alkohole werden, falls überhaupt, in Mengen von bis zu 20 Gew.-%, vorzugsweise bis zu 10 Gew.-%, bezogen auf das Gewicht der hydroxyfunktionellen Komponente B), zum Einsatz.

Bei der Herstellung der in den erfindungsgemäß verwendeten Polyurethan- oder Polyhamstoffmassen eingesetzten Polyisocyanatkomponente A) wird HDI mit der Estergruppen aufweisenden hydroxyfunktionellen Komponente B) unter Einhaltung eines Äquivalentverhältnisses von Isocyanatgruppen zu Hydroxylgruppen von 4:1 bis 50:1, vorzugsweise von 6:1 bis 40:1, besonders bevorzugt von 8:1 bis 30:1 umgesetzt.

Als hydroxyfunktionelle Komponente B) können wie oben beschrieben auch beliebige Gemische geeigneter Esteralkohole B) verwendet werden. Die Umsetzung des HDI mit der hydroxyfunktionellen Komponente B) findet dabei in Gegenwart von Katalysatoren C) statt, die die Allophanatisierung und gleichzeitig die Oligomerisierung von Isocyanatgruppen beschleunigen.

Geeignete Allophanatisierungskatalysatoren C) sind beispielsweise Metallcarboxylate, Metallchelate oder tertiäre Amine der in der GB-A-0 994 890 beschriebenen Art, die - wie in der EP-A 0 000 194 durch Vergleichsbeispiele belegt - nicht zu reinen Allophanaten führen sondern unter entsprechenden Reaktionsbedingungen daneben auch erhebliche Anteile an dimeren und trimeren Strukturen bilden.

Derartige Allophanatisierungskatalysatoren C) sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt- oder Nickelverbindungen oder beliebige Gemische dieser Katalysatoren.

Bevorzugte Katalysatoren dieser Gruppe sind Zinkverbindungen der genannten Art. Ganz besonders bevorzugt ist die Verwendung Zink-(II)-n-octanoat, Zink-(II)-2-ethyl-1-hexanoat und/oder Zink-(II)-stearat.

Geeignete Katalysatoren C), die neben der Allophanatisierungsreaktion die Trimerisierung von Isocyanatgruppen zu Isocyanuratstrukturen beschleunigen, sind darüberhinaus auch die aus der Polyisocyanatchemie bekannten üblichen Trimerisierungskatalysatoren, wie sie z. B. in J. Prakt. Chem. 336 (1994) 185 - 200, der EP-A 0 649 866 (Seite 4, Zeile 7 bis Seite 5, Zeile 15) oder der EP-A 0 896 009 (Seite 4, Zeile 17 bis 58) beschrieben sind. Als Katalysatoren C) geeignete Trimerisierungskatalysatoren sind beispielsweise quaternäre Ammoniumcarboxylate, wie z. B. N-(2-Hydroxypropyl)-N,N,N-trimethylammonium-2-ethylhexanoat, N-(2-Hydroxypropyl)-N,N,N-trimethylammonium-2-formiat, quaternäre Ammoniumhydroxide, wie z. B. Tetramethyl-, Tetraethyl-, Trimethylstearyl- und Dimethylethylcyclohexyl-ammoniumhydroxid, N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-(2-hydroxybutyl)-ammoniumhydroxid, N,N-Dimethyl-n-dodecyl-N-(2-hydroxyethyl)-ammoniumhydroxid, N-(2-Hydroxyethyl)-N,N-dimethyl-N-(2,2'-dihydroxymethyl-butyl)-ammoniumhydroxid, N-Methyl-2-hydroxyethyl-morpholiniumhydroxid, N-Methyl-N-(2-hydroxypropyl)-pyrrolidiniumhydroxid, N-Dodecyl-tris-N-(2-hydroxyethyl)-ammoniumhydroxid, Tetra-(2-hydroxyethyl)-ammoniumhydroxid, N,N,N-Trimethyl-N-benzylammoniumhydroxid, oder quaternäre Ammonium- und Phosphoniumhydrogenpolyfluoride, wie z. B. Tetrabutylphosphoniumhydrogendifluorid.

Ganz besonders bevorzugte Katalysatoren dieser Gruppe sind N,N,N-Trimethyl-N-(2-hydroxyethyl)-ammoniumhydroxid, N,N,N-Trimethyl-N-(2-hydroxypropyl)-ammoniumhydroxid, N,N,N-Trimethyl-N-(2-hydroxybutyl)-ammoniumhydroxid und insbesondere N,N,N-Trimethyl-N-benzyl-ammoniumhydroxid.

Ebenfalls als Katalysatoren C) geeignet sind auch solche, die neben der Allophanatisierungsreaktion in der Hauptsache die Dimerisierung und gleichzeitig in untergeordnetem Maße die Trimerisierung von Isocyanatgruppen unter Bildung von Uretdion- und Isocyanuratstrukturen beschleunigen, wie z. B. tertiäre Phosphine, der in der EP- A1 174 428 (Seite 3, Zeile 32 bis Seite 4, Zeile 1) genannten Art,

Als Katalysatoren C) geeignete tert.-Phosphine sind beispielsweise Triethylphosphin, Dibutylethylphosphin, Tri-n-propylphosphin, Triisopropylphosphin, Tri-tert.-butylphosphin, Tribenzylphosphin, Dicyclopentylbutylphosphin, Tricyclopentylphosphin, Benzyldimethylphosphin, Dimethylphenylphosphin, Tri-n-butylphosphin, Triisobutylphosphin, Triamylphosphin, Trioctylphosphin oder Butyl-phosphacyclopentan.

Bevorzugte Katalysatoren dieser Gruppe sind die genannten Trialkylphosphine. Ganz besonders bevorzugt sind Tributylphosphin, Trioctylphosphin und/oder Dicyclopentylbutylphosphin.

Die Katalysatoren C) kommen bei der Herstellung der Polyisocyanatkomponente A) in Abhängigkeit vom jeweils gewählten Katalysatortyp in einer Menge von 0,001 bis 5 Gew.-%, vorzugsweise 0,005 bis 2 Gew.-%, bezogen auf das Gesamtgewicht der Reaktionspartner HDI und Polyolkomponente B) zum Einsatz und können sowohl vor Reaktionsbeginn als auch zu jedem Zeitpunkt der Reaktion zugesetzt werden.

Die Herstellung der Polyisocyanatkomponente A) erfolgt vorzugsweise lösemittelfrei. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche ExxonMobil Chemical GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einer möglichen Ausführungsform wird bei der Herstellung der Polyisocyanatkomponente A) HDI, gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird die hydroxyfunktionelle Ausgangsverbindung B) in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluß an die Urethanisierungsreaktion, d. h. wenn der einem vollständigen Umsatz von Isocyanat- und Hydroxylgruppen theoretisch entsprechende NCO-Gehalt erreicht ist, wird die Allophanatisierung und Oligomerisierung durch Zusatz eines geeigneten Katalysators C) initiiert. In Abhängigkeit von der Art und Menge des eingesetzten Katalysators benötigt die daraufhin einsetzende Reaktion Temperaturen im Bereich von 50 bis 140°C.

In einer anderen möglichen Ausführungsform wird zur Herstellung der Polyisocyanatkomponente A) der mitzuverwendende Katalysator C) entweder dem HDI und/oder der gegenüber Isocyanatgruppen reaktiven Komponten B) bereits vor Beginn der eigentlichen Umsetzung zugemischt. In diesem Fall reagieren die sich intermediär bildenden Urethangruppen spontan weiter zur gewünschten Allophanatstruktur ab. Bei dieser Art der einstufigen Reaktionsführung werden die gegebenenfalls den Katalysator C) enthaltenden Ausgangsverbindungen HDI und die gegenüber Isocyanatgruppen reaktive Komponete B) gegebenenfalls unter Inertgas, wie beispielsweise Stickstoff in der Regel bei für die Allophanatisierung und Oligomerisierung optimalen Temperaturen im Bereich von 50 bis 140°C, vorzugsweise 60 bis 120°C, vorgelegt und zur Reaktion gebracht.

Es ist aber auch möglich, den Katalysator C) dem Reaktionsgemisch zu einem beliebigen Zeitpunkt während der Urethanisierungsreaktion zuzusetzen. Bei dieser Ausführungsform wird für die vor der Katalysatorzugabe ablaufende Urethanisierungsreaktion in der Regel eine Temperatur im Bereich von 30 bis 120°C, vorzugsweise von 50 bis 100°C, eingestellt. Nach Zugabe eines geeigneten Katalysators C) wird die Allophantisierungs- und Oligomerisierungsreaktion schließlich bei Temperaturen von 50 bis 140°C, vorzugsweise von 60 bis 120°C, durchgeführt.

Bei der Herstellung der Polyisocyanatkomponente A) kann der Verlauf der Umsetzung z. B. durch titrimetrische Bestimmung des NCO-Gehaltes verfolgt werden. Nach Erreichen des angestrebten NCO-Gehaltes, vorzugsweise wenn der Modifizierungsgrad (d. h. der prozentuale Anteil der zu Urethan- und Allophanatgruppen sowie gegebenenfalls unter Oligomerisierung abreagierten NCO-Gruppen des eingesetzten HDI des Reaktionsgemisches von 10 bis 40 %, vorzugsweise von 20 bis 30 % beträgt, wird die Reaktion abgebrochen. Dies kann beispielsweise durch Abkühlen des Reaktionsgemisches auf Raumtemperatur erfolgen. Im allgemeinen wird die Umsetzung aber durch Zugabe geeigneter Katalysatorgifte, beispielsweise Säurechloride wie Benzoylchlorid oder I-sophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (in der Hauptsache überschüssigem monomerem HDI, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben nicht umgesetztem monomerem HDI, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren möglichen Ausführungsform werden bei der Herstellung der Polyisocyanatkomponente A) die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Verfahrensführung und Aufarbeitung fallen die Polyisocyanatkomponenten A) in der Regel als klare, praktisch farblose Harze an, die eine mittlere NCO-Funktionalität von 3,0 bis 5,0, vorzugsweise 3,2 bis 4,8, besonders bevorzugt 3,6 bis 4,5, und einen NCO-Gehalt von 4,0 bis 21,0 Gew.-%, vorzugsweise 6,0 bis 18,0 Gew.-%, besonders bevorzugt 8,0 bis 16,0 Gew.-%, und einen Restgehalt an monomerem HDI von weniger als 1 Gew.-%, vorzugsweise weniger als 0,5 Gew.-%, besonders bevorzugt weniger als 0,3 Gew.-% aufweisen.

Der Allophanatisierungsgrad, d. h. der beispielsweise NMR-spektroskopisch bestimmbare prozentuale Anteil der zu Allophanatgruppen umgesetzten, aus den Hydroxylgruppen der Komponente B) sich intermediär bildenden Urethangruppen beträgt bei den erfindungsgemäß eingesetzten Polyisocyanatkomponenten A) mindestens 40 %, bevorzugt mindestens 50 % und ganz besonders von mindestens 60 %. Das molare Verhältnis von oligomeren Strukturen, d. h. insbesondere der Summe aus Uretdion- und Isocyanuratstrukturen, zu Allophanatgruppen beträgt in der Regel von 10 : 90 bis 60 : 40, vorzugsweise 15 : 85 bis 55 : 45, besonders bevorzugt von 20 : 80 bis 50 : 50.

Zur Herstellung der erfindungsgemäßen lichtechten Polyurethan- und/oder Polyharnstoffmassen, kommen neben den vorstehend beschriebenen Polyisocyanatkomponenten A) gegebenenfalls weitere von A) verschiedene monomerarme aliphatische und/oder cycloaliphatische Polyisocyanate D) mit zum Einsatz. Hierbei handelt es sich um die bekannten durch Modifizierung einfacher Diisocyanate erhältlichen Polyisocyanate mit Uretdion-, Isocyanurat-, Iminooxadiazindion-, Urethan-, Allophanat-, Biuret- und/oder Oxadiazintrionstruktur, wie sie beispielsweise in J. Prakt. Chem. 336 (1994) 185 - 200, DE-A 1 670 666, DE-A 3 700 209, DE-A 3 900 053, EP-A 0 330 966, EP-A 0 339 396 und EP-A 0 798 299 beispielhaft beschrieben sind. Geeignete Ausgangsdiiisocyanate zur Herstellung der Polyisocyanatkomponenten D) sind beispielsweise solche des Molekulargewichtsbereiches 140 bis 400 mit aliphatisch und/oder cycloaliphatisch gebundenen Isocyanatgruppen, wie z.B. 1,4-Butandiisocyanat, HDI, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat, IPDI), 2,4'- und/oder 4,4'-Diisocyanatodicyclohexylmethan und 1,3-Diisocyanato-2(4)-methylcyclohexan, oder deren Gemische.

Falls überhaupt, kommen diese Polyisocyanatkomponenten D) in einer Menge von bis zu 60 Gew.-%, vorzugsweise bis zu 50 Gew.-%, besonders bevorzugt bis zu 40 Gew.-%, bezogen auf das Gesamtgewicht der Polyisocyanatkomponenten A) und D) zum Einsatz.

Zur erfindungsgemäßen Verwendung der Polyurethan- und/oder Polyharnstoffmassen werden die vorstehend beschriebenen Polyisocyanatkomponenten A) gegebenenfalls im Gemisch mit den monomerarmen aliphatischen und/oder cycloaliphatischen Polyisocyanaten D) mit beliebigen lösemittelfreien gegenüber Isocyanatgruppen reaktiven Reaktionspartnern E) umgesetzt, die eine im Sinne der Isocyanat-Additionsreaktion mittlere Funktionalität von 2,0 bis 6,0, vorzugsweise von 2,5 bis 4,0, besonders bevorzugt von 2,5 bis 3,5 aufweisen.

Hierbei handelt es sich insbesondere um die üblichen aus der Polyurethanchemie bekannten Polyetherpolyole, Polyesterpolyole, Polyetherpolyesterpolyole, Polythioetherpolyole, polymermodifizierte Polyetherpolyole, Pfropfpolyetherpolyole, insbesondere solche auf Styrol- und/oder Acrylnitrilbasis, Polyetherpolyamine, hydroxylgruppenhaltigen Polyacetale und/oder hydroxylgruppenhaltigen aliphatischen Polycarbonate, die üblicherweise ein Molekulargewicht von 106 bis 12000, vorzugsweise 250 bis 8000 aufweisen. Ein breiter Überblick über geeignete Reaktionspartner E) findet sich beispielsweise in N. Adam et al.: "Polyurethanes", Ullmann's Encyclopedia of Industrial Chemistry, Electronic Release, 7th ed., chap. 3.2 - 3.4, Wiley-VCH, Weinheim 2005.

Geeignete Polyetherpolyole E) sind beispielsweise solche der in der DE-A 2 622 951, Spalte 6, Zeile 65 - Spalte 7, Zeile 47, oder der EP-A 0 978 523 Seite 4, Zeile 45 bis Seite 5, Zeile 14 genannten Art, sofern sie den oben gemachten Angaben hinsichtlich Funktionalität und Molekulargewicht entsprechen, wobei solche Polyetherpolyole bevorzugt sind, deren Hydroxylgruppen zumindest zu 50 %, vorzugsweise zumindest zu 80 %, aus primären Hydroxylgruppen bestehen. Besonders bevorzugte Polyetherpolyole E) sind Anlagerungsprodukte von Ethylenoxid und/oder Propylenoxid an Glycerin, Trimethylolpropan, Ethylendiamin und/oder Pentaerythrit.

Geeignete Polyesterpolyole E) sind beispielsweise solche der in der EP-A 0 978 523 Seite 5, Zeilen 17 bis 47 oder der EP-B 0 659 792 Seite 6, Zeilen 9 bis 19 genannten Art, sofern sie den oben gemachten Angaben entsprechen, bevorzugt solche, deren Hydroxylzahl von 20 bis 650 mg KOH/g beträgt.

Geeignete Polythiopolyole E) sind beispielsweise die bekannten Kondensationsprodukte von Thiodiglykol mit sich selbst oder anderen Glykolen, Dicarbonsäuren, Formaldehyd, Aminocarbonsäuren und/oder Aminoalkoholen. Je nach Art der eingesetzten Mischkomponenten handelt es sich bei diesen um Polythiomischetherpolyole, Polythioetheresterpolyole oder Polythioetheresteramidpolyole.

Als Komponente E) geeignete Polyacetalpolyole sind beispielsweise die bekannten Umsetzungsprodukte einfacher Glykole, wie z. B. Diethylenglykol, Triethylenglykol, 4,4'-Dioxethoxy-diphenyl-dimethylmethan (Addukt von 2 mol Ethylenoxid an Bisphenol A) oder Hexandiol, mit Formaldehyd oder auch durch Polykondensation cyclischer Acetale, wie z. B. Trioxan, hergestellte Polyacetale.

Darüberhinaus sind als Komponente E) auch Aminopolyether oder Gemische von Aminopolyethern gut geeignet, d. h. Polyether mit gegenüber Isocyanatgruppen reaktionsfähigen Gruppen, die sich zumindest zu 50 Äquivalent-%, vorzugsweise zumindest zu 80 Äquivalent-%, aus primären und/oder sekundären, aromatisch oder aliphatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Spalte 4, Zeile 26 bis Spalte 5, Zeile 40, genannten Verbindungen. Ebenfalls als Ausgangskomponente E) geeignet sind aminofunktionelle Polyetherurethane oder -harnstoffe, wie sie sich beispielsweise nach dem Verfahren der DE-A 2 948 419 durch Hydrolyse von isocyanatfunktionellen Polyetherprepolymeren herstellen lassen oder auch Aminogruppen aufweisende Polyester des obengenannten Molekulargewichtsbereichs.

Weitere geeignete gegenüber Isocyanatgruppen reaktive Komponenten E) sind beispielsweise auch die in EP-A 0 689 556 und EP-A 0 937 110 beschriebenen, z. B. durch Umsetzung epoxidierter Fettsäureester mit aliphatischen oder aromatischen Polyolen unter Epoxidringöffung erhältlichen speziellen Polyole.

Auch Hydroxylgruppen enthaltende Polybutadiene können gegebenenfalls als Komponente E) eingesetzt werden.

Zur Herstellung von Körpern aus Polyurethan- und/oder Polyharnstoffmassen, die eine besonders hohe Lichtbrechung aufweisen, eignen sich als gegenüber Isocyanatgruppen reaktive Komponenten E) insbesondere Polymercaptane, also Polythioverbindungen, beispielsweise einfache Alkanthiole, wie z. B. Methandithiol, 1,2-Ethandithiol, 1,1-Propandithiol, 1,2-Propandithiol, 1,3-Propandithiol, 2,2-Propandithiol, 1,4-Butandithiol, 2,3-Butandithiol, 1,5-Pentandithiol, 1,6-Hexandithiol, 1,2,3-Propantrithiol, 1,1-Cyclohexandithiol, 1,2-Cyclohexandithiol, 2,2-Dimethylpropan-1,3-dithiol, 3,4-Dimethoxybutan-1,2-dithiol und 2-Methylcyclohexan-2,3-dithiol, Thioethergruppen enthaltende Polythiole, wie z. B. 2,4-Dimercaptomethyl-1,5-dimercapto-3-thiapentan, 4-Mercaptomethyl-1,8-dimercapto-3,6-dithiaoctan, 4,8-Dimercaptomethyl-1,11-dimercapto-3,6,9-tri-thiaundecan, 4,7-Dimercaptomethyl-1,11-dimercapto-3,6,9-trithiaundecan, 5,7-Dimercaptomethyl-1,11-dimercapto-3,6,9-trithiaundecan, 4,5-Bis(mercaptoethylthio)-1,10-dimercapto-3,8-dithiadecan, Tetrakis(mercaptomethyl)methan, 1,1,3,3-Tetrakis(mercaptomethylthio)propan, 1,1,5,5-Tetrakis(mercaptomethylthio)-3-thiapentan, 1,1,6,6-Tetrakis(mercaptomethylthio)-3,4-dithiahexan, 2-Mercaptoethylthio-1,3-dimercaptopropan, 2,3-Bis(mercaptoethylthio)-1-mercaptopropan, 2,2-Bis(mercaptomethyl)-1,3-dimercaptopropan, Bis(mercaptomethyl)sulfid, Bis(mercaptomethyl)disulfid, Bis(mercaptoethyl)sulfid, Bis(mercaptoethyl)disulfid, Bis(mercaptopropyl)sulfid, Bis(mercaptopropyl)disulfid, Bis(mercaptomethylthio)methan, Tris(mercaptomethylthio)methan, Bis-(mercaptoethylthio)methan, Tris(mercaptoethylthio)methan, Bis(mercaptopropylthio)methan, 1,2-Bis(mercaptomethylthio)ethan, 1,2-Bis(mercaptoethylthio)ethan, 2-Mercaptoethylthio)ethan, 1,3-Bis(mercaptomethylthio)propan, 1,3-Bis(mercaptopropylthio)propan, 1,2,3-Tris(mercaptomethylthio)propan, 1,2,3-Tris(mercaptoethylthio)propan, 1,2,3-Tris(mercaptopropylthio)propan, Tetrakis-(mercaptomethylthio)methan, Tetrakis(mercaptoethylthiomethyl)methan, Tetrakis(mercaptopropylthiomethyl)methan, 2,5-Dimercapto-1,4-dithian, 2,5-Bis(mercaptomethyl)-1,4-dithian und dessen gemäß JP-A 07 118 263 erhältliche Oligomere, 1,5-Bis(mercaptopropyl)-1,4-dithian, 1,5-Bis(2-mercaptoethylthiomethyl)-1,4-dithian, 2-Mercaptomethyl-6-mercapto-1,4-dithiacycloheptan, 2,4,6-Trimercapto-1,3,5-trithian, 2,4,6-Trimercaptomethyl-1,3,5-trithian und 2-(3-Bis(mercaptomethyl)-2-thiapropyl)-1,3-dithiolan, Polyesterthiole, wie z. B. Ethylenglycol-bis(2-mercaptoacetat), Ethylenglycol-bis(3-mercaptopropionat), Diethylenglycol(2-mercaptoacetat), Diethylenglycol(3-mercaptopropionat), 2,3-Dimercapto-1-propanol(3-mercaptopropionat), 3-Mercapto-1,2-propandiol-bis(2-mercaptoacetat), 3-Mercapto-1,2-propandiol-bis(3-mercaptopropionat), Trimethylolpropan-tris(2-mercaptoacetat), Trimethylolpropan-tris(3-mercaptopropionat), Trimethylolethan-tris(2-mercaptoacetat), Trimethylolethan-tris(3-mercaptopropionat), Pentaerythrit-tetrakis(2-mercaptoacetat), Pentaerythrit-tetrakis(3-mercaptopropionat), Glycerin-tris(2-mercaptoacetat), Glycerin-tris(3-mercaptopropionat), 1,4-Cyclohexandiol-bis(2-mercaptoacetat), 1,4-Cyclohexandiol-bis(3-mercaptopropionat), Hydroxymethylsulfid-bis(2-mercaptoacetat), Hydroxymethylsulfid-bis(3-mercaptopropionat), Hydroxyethylsulfid(2-mercaptoacetat), Hydroxyethylsulfid(3-mercaptopropionat), Hydroxymethyldisulfid(2-mercaptoacetat), Hydroxymethyldisulfid(3-mercaptopropionat), (2-Mercaptoethylester)thioglycolat und Bis(2-mercaptoethylester)thiodipropionat sowie aromatische Thioverbindungen, wie z. B. 1,2-Dimercaptobenzol, 1,3-Dimercaptobenzol, 1,4-Dimercaptobenzol, 1,2-Bis(mercaptomethyl)benzol, 1,4-Bis(mercaptomethyl)benzol, 1,2-Bis(mercaptoethyl)benzol, 1,4-Bis(mercaptoethyl)benzol, 1,2,3-Trimercaptobenzol, 1,2,4-Trimercaptobenzol, 1,3,5-Trimercaptobenzol, 1,2,3-Tris(mercaptomethyl)benzol, 1,2,4-Tris(mercaptomethyl)benzol, 1,3,5-Tris-(mercaptomethyl)benzol, 1,2,3-Tris(mercaptoethyl)benzol, 1,3,5-Tris(mercaptoethyl)benzol, 1,2,4-Tris(mercaptoethyl)benzol, 2,5-Toluoldithiol, 3,4-Toluoldithiol, 1,4-Naphthalindithiol, 1,5-Naphthalindithiol, 2,6-Naphthalindithiol, 2,7-Naphthalindithiol, 1,2,3,4-Tetramercaptobenzol, 1,2,3,5-Tetramercaptobenzol, 1,2,4,5-Tetramercaptobenzol, 1,2,3,4-Tetrakis(mercaptomethyl)benzol, 1,2,3,5-Tetrakis(mercaptomethyl)benzol, 1,2,4,5-Tetrakis(mercaptomethyl)benzol, 1,2,3,4-Tetrakis(mercaptoethyl)benzol, 1,2,3,5-Tetrakis(mercaptoethyl)benzol, 1,2,4,5-Tetrakis(mercaptoethyl)-benzol, 2,2'-Dimercaptobiphenyl und 4,4'-Dimercaptobiphenyl.

Bevorzugte Polythioverbindungen E) sind Polythioetherthiole und Polyesterthiole der genannnten Art. Besonders bevorzugte Polythioverbindungen E) sind 4-Mercaptomethyl-1,8-dimercapto-3,6-dithiaoctan, 2,5-Bismercaptomethyl-1,4-dithian, 1,1,3,3-Tetrakis(mercaptomethylthio)propan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimereaptomethyl-1,11-dimercapto-3,6,9-trithiaundecan, Trimethylolpropan-tris(3-mercaptopropionat), Trimethylolethan-tris(2-mercaptoacetat), Pentaerythrit-tetrakis(2-mercaptoacetat) und Pentaerythrit-tetrakis(3-mercaptopropionat).

Darüberhinaus sind als gegenüber Isocyanatgruppen reaktive Komponenten E) auch Schwefel enthaltende Hydroxyverbindungen geeignet. Beispielhaft seien hier genannt einfache Mercaptoalkohole, wie z. B. 2-Mercaptoethanol, 3-Mercaptopropanol, 1,3-Dimercapto-2-propanol, 2,3-Dimercaptopropanol und Dithioerythritol, Thioetherstrukturen enthaltende Alkohole, wie z. B. Di(2-hydroxyethyl)sulfid, 1,2-Bis(2-hydroxyethylmercapto)ethan, Bis(2-hydroxyethyl)disulfid und 1,4-Dithian-2,5-diol, oder Schwefel enthaltende Diole mit Polyesterurethan-, Polythioesterurethan-, Polyesterthiourethan- oder Polythioesterthiourethanstruktur der in der EP-A 1 640 394 genannten Art.

Bei der Herstellung der erfindungsgemäßen lichtechten Körper aus diesen Polyurethan- und/oder Polyharnstoffmassen können als gegenüber Isocyanaten reaktive Verbindungen E) auch niedermolekulare, hydroxy- und/oder aminofunktionelle Komponenten, d. h. solche eines Molekulargewichtsbereiches von 62 bis 500, vorzugsweise von 62 bis 400, zum Einsatz kommen.

Hierbei handelt es sich beispielsweise um die einfachen ein- oder mehrwertige Alkohole mit 2 bis 14, vorzugsweise 4 bis 10 Kohlenstoffatomen, wie sie bereits oben als geeignete Ausgangsverbindungen zur Herstellung der Polyesteralkohole B) beschrieben sind.

Beispiele für geeignete niedermolekulare aminofunktionelle Verbindungen sind beispielsweise aliphatische und cycloaliphatische Amine und Aminoalkohole mit primär und/oder sekundär gebundenen Aminogruppen, wie z. B. Cyclohexylamin, 2-Methyl-1,5-pentandiamin, Diethanolamin, Monoethanolamin, Propylamin, Butylamin, Dibutylamin, Hexylamin, Monoisopropanolamin, Diisopropanolamin, Ethylendiamin, 1,3-Diaminopropan, 1,4-Diaminobutan, Isophorondiamin, Diethylenetriamin, Ethanolamin, Aminoethylethanolamin, Diaminocyclohexan, Hexamethylendiamin, Methyliminobispropylamin, Iminobispropylamin, Bis(aminopropyl)piperazin, Aminoethylpiperazin, 1,2-Diaminocyclohexan, Triethylentetramin, Tetraethylenpentamin, 1,8-p-Diaminomenthan, Bis(4-aminocyclohexyl)methan, Bis(4-amino-3-methylcyclohexyl)methan, Bis(4-amino-3,5-dimethylcyclohexyl)methan, Bis(4-amino-2,3,5-trimethylcyclohexyl)methan, 1,1-Bis(4-aminocyclohexyl)propan, 2,2-Bis(4-aminocyclohexyl)propan, 1,1-Bis(4-aminocyclohexyl)ethan, 1,1-Bis-(4-aminocyclohexyl)butan, 2,2-Bis(4-aminocyclohexyl)butan, 1,1-Bis(4-amino-3-methylcyclohexyl)ethan, 2,2-Bis(4-amino-3-methylcyclohexyl)propan, 1,1-Bis(4-amino-3,5-dimethylcyclohexyl)ethan, 2,2-Bis(4-amino-3,5-dimethylcyclohexyl)propan, 2,2-Bis(4-amino-3,5-dimethylcyclohexyl)butan, 2,4-Diaminodicyclohexylmethan, 4-Aminocyclohexyl-4-amino-3-methylcyclohexylmethan, 4-Amino-3,5-dimethylcyclohexyl-4-amino-3-methylcyclohexylmethan und 2-(4-Aminocyclohexyl)-2-(4-amino-3-methylcyclohexyl)methan.

Beispiele für aromatische Polyamine, insbesondere Diamine, mit Molekulargewichten unter 500, die geeignete gegenüber Isocyanaten reaktive Verbindungen E) darstellen, sind z. B. 1,2- und 1,4-Diaminobenzol, 2,4- und 2,6-Diaminotoluol, 2,4'- und/oder 4,4'-Diaminodiphenylmethan, 1,5-Diaminonaphthalin, 4,4',4"-Triaminotriphenylmethan, 4,4'-Bis-(methylamino)-diphenylmethan oder 1-Methyl-2-methylamino-4-aminobenzol. 1-Methyl-3,5-diethyl-2,4-diaminobenzol, 1-Methyl-3,5-diethyl-2,6-diaminobenzol, 1,3,5-Trimethyl-2,4-diaminobenzol, 1,3,5-Triethyl-2,4-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 3,3'-Diethyl-5,5'-diisopropyl-4,4'-diaminodiphenylmethan, 1-Methyl-2,6-diamino-3-isopropylbenzol, flüssige Gemische von Polyphenylpolymethylenpolyaminen, wie sie auf bekannte Weise durch Kondensation von Anilin mit Formaldehyd erhältlich sind, sowie beliebige Mischungen solcher Polyamine. In diesem Zusammenhang seien beispielsweise Mischungen von 1-Methyl-3,5-diethyl-2,4-diaminobenzol mit 1-Methyl-3,5-diethyl-2,6-diaminobenzol in einem Gewichtsverhältnis von 50 : 50 bis 85 : 15, vorzugsweise von 65 : 35 bis 80 : 20 besonders erwähnt.

Die Verwendung niedermolekularer aminofunktioneller Polyether mit Molekulargewichten unter 500 ist ebenfalls möglich. Hierbei handelt es sich beispielsweise um solche mit primären und/oder sekundären, aromatisch oder aliphatisch gebundenen Aminogruppen, deren Aminogruppen gegebenenfalls über Urethan- oder Estergruppen an die Polyetherketten angebunden sind und die nach bekannten, bereits oben zur Herstellung der höhermolekularen Aminopolyether beschriebenen Verfahren zugänglich sind.

Gegebenenfalls können auch sterisch gehinderte aliphatische Diamine mit zwei sekundär gebundenen Aminogruppen als gegenüber Isocyanatgruppen reaktive Komponenten E) eingesetzt werden, wie z. B. die aus EP-A 0 403 921 bekannten Umsetzungsprodukte aliphatischer und/oder cycloaliphatischer Diamine mit Maleinsäure- oder Fumarsäureestern, das gemäß der Lehre der EP-A 1 767 559 erhältliche Bisaddukt von Acrylnitril an Isophorondiamin oder die beispielsweise in der DE-A 19 701 835 beschriebenen Hydrierungsprodukte aus aliphatischen und/oder cycloaliphatischen Diaminen und Ketonen, wie z. B. Diisopropylketon, zugänglicher Schiffscher Basen.

Bevorzugte Reaktionspartner E) für die isocyanatfunktionellen Ausgangskomponenten A) sind die vorstehend genannten polymeren Polyetherpolylole, Polyesterpolyole und/oder Aminopolyether, die genannten niedermolekularen aliphatischen und cycloaliphatischen mehrwertigen Alkohole sowie die genannten niedermolekularen mehrwertigen Amine, insbesondere sterisch gehinderte aliphatische Diamine mit zwei sekundär gebundenen Aminogruppen.

Als Reaktionspartner für die isocyanatfunktionellen Ausgangskomponenten A) eignen sich auch beliebige Gemische der vorstehend beispielhaft genannten gegenüber Isocyanatgruppen reaktiven Komponenten E). Während unter Verwendung ausschließlich hydroxyfunktioneller Komponenten E) reine Polyurethanmassen und unter ausschließlicher Verwendung von Polyaminen E) reine Polyharnstoffmassen erhalten werden, lassen sich unter Verwendung von Aminoalkoholen oder geeigneter Gemische von hydroxy- mit aminofunktionellen Verbindungen als Komponente E) Polyurethanharnstoffe herstellen, in denen sich das Äquivalentverhältnis von Urethan- zu Harnstoffgruppen beliebig einstellen lässt.

Unabhängig von der Art der gewählten Ausgangsstoffe erfolgt die Umsetzung der Polyisocyanatkomponenten A) mit den gegenüber Isocyanatgruppen reaktiven Komponenten E) unter Einhaltung eines Äquivalentverhältnisses von Isocyanatgruppen zu gegenüber Isocyanaten reaktiven Gruppen von 0,5 : 1 bis 2,0 : 1, vorzugsweise von 0,7 : 1 bis 1,3 : 1, besonders bevorzugt von 0,8 : 1 bis 1,2 : 1.

Neben den genannten Ausgangskomponeten A) und E) können dabei gegebenenfalls weitere Hilfs- und Zusatzmittel F), wie z. B. Katalysatoren, Treibmittel, oberflächenaktive Mittel, UV-Stabilisatoren, Schaumstabilisatoren, Antioxidantien, Formtrennmittel, Füllstoffe und Pigmente, mitverwendet werden.

Zur Reaktionsbeschleunigung können beispielsweise übliche aus der Polyurethanchemie bekannte Katalysatoren zum Einsatz kommen. Beispielhaft seien hier genannt tert. Amine, wie z. B. Triethylamin, Tributylamin, Dimethylbenzylamin, Diethylbenzylamin, Pyridin, Methylpyridin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethylaminoethylpiperidin, N,N'-Dimethylpiperazin, N-Methyl-N'-dimethylaminopiperazin, 1,8-Diazabicyclo(5.4.0)undecen-7, 1,2-Dimethylimidazol, 2-Methylimidazol, N,N-Dimethylimidazol-β-phenylethylamin, 1,4-Diazabicyclo-(2,2,2)-octan, Bis-(N,N-dimethylaminoethyl)adipat; Alkanolaminverbindungen, wie z. B. Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin und/oder Bis(dimethylaminoethyl)ether; Metallsalze, wie z. B. anorganische und/oder organische Verbindungen des Eisens, Bleis, Wismuths, Zinks, und/oder Zinns in üblichen Oxidationsstufen des Metalls, beispielsweise Eisen(II)-chlorid, Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat (DBTL), Dibutyldilaurylzinnmercaptid, oder Bleioctoat; Amidine, wie z. B. 2,3-Dimethyl-3,4,5,6-tetrahydropyrimidin; Tetraalkylammoniumhydroxide, wie z. B. Tetramethylammoniumhydroxid; Alkalihydroxide, wie z. B. Natriumhydroxid und Alkalialkoholate, wie z. B. Natriummethylat und Kaliumisopropylat, sowie Alkalisalze von langkettigen Fettsäuren mit 10 bis 20 C-Atomen und gegebenenfalls seitenständigen OH-Gruppen.

Bevorzugt einzusetzende Katalysatoren F) sind tertiäre Amine und Zinnverbindungen der genannten Art.

Die beispielhaft genannten Katalysatoren können bei der Herstellung der erfindungsgemäßen lichtechten Polyurethan- und/oder Polyharnstoffmassen einzeln oder in Form beliebiger Mischungen untereinander eingesetzt werden und kommen dabei gegebenenfalls in Mengen von 0,01 bis 5,0 Gew.%, bevorzugt 0,1 bis 2 Gew.-%, berechnet als Gesamtmenge an eingesetzten Katalysatoren bezogen auf die Gesamtmenge der verwendeten Ausgangsverbindungen, zum Einsatz.

Nach dem erfindungsgemäßen Verfahren werden vorzugsweise kompakte Formteile hergestellt. Durch Zusatz geeigneter Treibmittel lassen sich aber auch geschäumte Formkörper erhalten. Hierfür geeignete Treibmittel sind beispielsweise leicht flüchtige organische Substanzen und/oder gelöste inerte Gase, wie z.B. Stickstoff, Luft oder Kohlendioxid.

Als chemische Treibmittel F), d. h. Treibmittel die aufgrund einer Reaktion, beispielsweise mit Isocyanatgruppen, gasförmige Produkte bilden, kommen beispielsweise Wasser, Hydratwasser enthaltende Verbindungen, Carbonsäuren, tert.-Alkohole, z. B. t-Butanol, Carbamate, beispielsweise die in der EP-A 1 000 955, insbesondere auf den Seiten 2, Zeilen 5 bis 31 sowie Seite 3, Zeilen 21 bis 42 beschriebenen Carbamate, Carbonate, z. B. Ammoniumcarbonat und/oder Ammoniumhydrogencarbonat und/oder Guanidincarbamat in Betracht. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Erfindungsgemäß können auch oberflächenaktive Zusatzstoffe F) als Emulgatoren und Schaumstabilisatoren mitverwendet werden. Geeignete Emulgatoren sind beispielsweise die Natriumsalze von Ricinusölsulfonaten oder Fettsäuren, Salze von Fettsäuren mit Aminen, wie z. B. ölsaures Diethylamin oder stearinsaures Diethanolamin. Auch Alkali- oder Ammoniumsalze von Sulfonsäuren, wie z. B. von Dodecylbenzolsulfonsäuren, Fettsäuren, wie z. B. Ricinolsäure, oder polymeren Geeignete Schaumstabilisatoren sind insbesondere die bekannten, vorzugsweise wasserlöslichen Polyethersiloxane, wie sie beispielsweise US-A 2 834 748, DE-A 1 012 602 und DE-A 1 719 238 beschrieben sind. Auch die gemäß DE-A 2 558 523 erhältlichen über Allophanatgruppen verzweigte Polysiloxan-Polyoxyalkylen-Copolymere stellen geeignete Schaumstabilisatoren dar.

Die vorstehend genannten, beim erfindungsgemäßen Verfahren gegebenenfalls mitzuverwendenden Emulgatoren und Stabilisatoren können sowohl einzeln als auch in beliebigen Kombinationen untereinander zum Einsatz kommen.

Die aus den erfindungsgemäß zu verwendenden Polyurethan- und/oder Polyharnstoffmassen erhaltenen Körper zeichnen sich bereits als solche, d. h. ohne Zusatz entsprechender Stabilisatoren zu den zugrundeliegenden Massen, durch eine sehr gute Lichtbeständigkeit aus. Dennoch können bei ihrer Herstellung gegebenenfalls UV-Schutzmittel (Lichtstabilisatoren) oder Antioxidantien der bekannten Art als weitere Hilfs- und Zusatzmittel F) mitverwendet werden.

Geeignete UV-Stabilisatoren F) sind beispielsweise Piperidinderivate, wie z. B. 4-Benzoyloxy-2,2,6,6-tetramethylpiperidin, 4-Benzoyloxy-1,2,2,6,6-pentamethylpiperidin, Bis-(2,2,6,6-tetramethyl-4-piperidyl)-sebacat, Bis(1,2,2,6,6-pentamethyl-1-4-piperidinyl)-sebacat, Bis-(2,2,6,6-tetramethyl-4-piperidyl)-suberat oder Bis-(2,2,6,6-tetramethyl-4-piperidyl)-dodecandioat, Benzophenonderivate, wie z. B. 2,4-Dihydroxy-, 2-Hydroxy-4-methoxy-, 2-Hydroxy-4-octoxy-, 2-Hydroxy-4-dodecyloxy oder 2,2'-Dihydroxy-4-dodecyloxy-benzophenon, Benztriazolderivate, wie z. B. 2-(2'-Hydroxy-3',5'-di-tert.-amylphenyl)-benztriazol, Oxalanilide, wie z. B. 2-Ethyl-2'-ethoxy- oder 4-Methyl-4'-methoxyoxalanilid, Salicylsäureester, wie z. B. Salicylsäurephenylester, Salicylsäure-4-tert.-butylphenylester und Salicylsäure-4-tert.-octylphenylester, Zimtsäureesterderivate, wie z. B. α-Cyano-β-methyl-4-methoxyzimtsäuremethylester, α-Cyano-β-methyl-4-methoxyzimtsäurebutylester, α-Cyano-β-phenylzimtsäureethylester und α-Cyano-β-phenylzimtsäureisooctylester, oder Malonesterderivate, wie z. B. 4-Methoxy-benzylidenmalonsäuredimethylester, 4-Methoxybenzyliderunalonsäurediethylester und 4-Butoxy-benzylidenmalonsäuredimethylester. Diese Lichtstabilisatoren können sowohl einzeln als auch in beliebigen Kombinationen untereinander zum Einsatz kommen.

Geeignete Antioxidantien F) sind beispielsweise die bekannten sterisch gehinderten Phenole, wie z.B. 2,6-Di-tert-butyl-4-methylphenol (Ionol), Pentaerythrit-tetrakis(3-(3,5-di-tert-butyl-4-hydroxyphenyl)propionat), Octadecyl-3-(3,5-di-tert-butyl-4-hydroxyphenyl)-propionat, Triethylenglykol-bis(3-tert-butyl-4-hydroxy-5-methylphenyl)propionat, 2,2'-Thio-bis(4-methyl-6-tert-butylphenol), 2,2'-Thiodiethyl-bis[3-(3,5-di-tert-butyl-4-hydroxyphenyl)propionat), die sowohl einzeln als auch in beliebigen Kombinationen miteinander zum Einsatz kommen.

Weitere, gegebenenfalls mitzuverwendende Hilfs- und Zusatzmittel F) sind beispielsweise Zellregler der an sich bekannten Art, wie z. B. Paraffine oder Fettalkohole, die bekannten Flammschutzmittel, wie z.B. Tris-chlorethylphosphat, Ammoniumphosphat oder -polyphosphat, Füllstoffe, wie z. B. Bariumsulfat, Kieselgur, Russ, Schlämmkreide oder auch verstärkend wirkende Glasfasern. Schliesslich können beim erfmdungsgemässen Verfahren gegebenenfalls auch die an sich bekannten inneren Formtrennmittel Farbstoffe, Pigmente, Hydrolyseschutzmittel, fungistatische und bakteriostatisch wirkende Substanzen mitverwendet werden.

Die genannte, gegebenenfalls mitzuverwendende Hilfs- und Zusatzmittel F) können sowohl der Polyisocyanatkompente A) und/oder der gegenüber Isocyanatgruppen reaktiven Komponente E) zugemischt werden.

Zur Herstellung der erfindungsgemäßen lichtechten Polyurethan- und/oder Polyharnstoffmassen werden die Polyisocyanatkompente A) mit der gegenüber Isocyanatgruppen reaktiven Komponente E), gegebenenfalls unter Mitverwendung der vorstehend genannten Hilfs- und Zusatzmittel F), in lösemittelfreier Form im oben angegebenen NCO/OH-Verhältnis mit Hilfe geeigneter Mischaggregate gemischt und nach beliebigen Methoden, in offenen oder geschlossenen Formen, beispielsweise durch einfaches Vergießen von Hand, bevorzugt aber mit Hilfe geeigneter Maschinen, wie z. B. den in der Polyurethantechnologie üblichen Niederdruck- oder Hochdruckmaschinen oder nach dem RIM-Verfahren, bei einer Temperatur von bis zu 160°C, vorzugsweise von 20 bis 140°C, besonders bevorzugt von 40 bis 100°C, und gegebenenfalls unter einem erhöhten Druck von bis zu 300 bar, vorzugsweise bis 100 bar, besonders bevorzugt bis zu 40 bar ausgehärtet.

Dabei können die Ausgangskomponenten A) und B) zur Verringerung der Viskositäten gegebenenfalls auf eine Temperatur von bis zu 120°C, vorzugsweise bis zu 100°C, besonders bevorzugt bis zu 90°C, vorgeheizt und gegebenenfalls durch Anlegen von Vakuum entgast werden.

In der Regel können die so hergestellten Polyurethan- und/oder Polyharnstoffmassen nach kurzer Zeit, beispielsweise nach einer Zeit von 2 bis 60 min, entformt werden. Gegebenenfalls kann sich eine Nachhärtung bei einer Temperatur von 50 bis 100 °C, vorzugsweise bei 60 bis 90°C, anschließen.

Auf diese Weise erhält man kompakte oder geschäumte, licht- und wetterbeständige, weiche Polyurethan- und/oder Polyharnstoffmassen, die sich durch eine hohe Beständigkeit gegenüber Lösungsmitteln und Chemikalien sowie eine exzellente Wärmeformbeständigkeit auch bei höheren Temperaturen von beispielsweise 90°C auszeichnen.

Während die erfindungsgemäßen Polyurethan- und/oder Polyharnstoffmassen eine hohe Elastizität und gleichzeitig eine hohe Wärmeformbeständigkeit in sich vereinen, besitzen Polyurethanmassen, die entsprechend dem Stand der Technik unter Verwendung üblicher allophanatgruppenfreier HDI-Polyisocyanate, wie z. B. Trimerisaten oder Biureten, hergestellt wurden, höhere Härte sowie geringere Elastizität überraschenderweise aber dennoch eine völlig unzureichende Wärmeformbeständigkeit. Andererseit zeigen Polyurethane auf Basis reiner HDI-Polyesterallophanate, wie sie beispielsweise nach EP-A 0 000 194 erhältlich sind, zwar ähnlich hohe Elastizitäten wie die erfindungsgemäßen Polyurethan- und/oder Polyharnstoffmassen, aber schlechte Lösungsmittel- und Chemikalienbeständigkeiten. Die gewünschte Kombination von Elastizität, hoher Wärmeformbeständigkeit und gleichzeitig guter Chemikalienbeständigkeit lässt sich nur mit den erfindungsgemäß eingesetzten Polyisocyanatkomponenten erreichen.

Die erfindungsgemäßen Polyurethan- und/oder Polyharnstoffmassen eignen sich für Vielzahl unterschiedlicher Anwendungen, beispielsweise zum Verguss optischer, elektronischer oder optoelektronischer Bauteile, wie z. B. von Solarmodulen oder von Leuchtdioden, daneben auch zur Herstellung von Dichtungen, Dämpfungselementen oder Körpern aus weichem Integralschaum.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

OH-Zahlen wurden titrimetrisch in Anlehnung an DIN 53240 T.2, Säure-Zahlen nach DIN 3682 bestimmt.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Messung der Hazen-Farbzahl erfolgte spektrofotometrisch nach DIN EN 1557 mit einem LICO 400-Spektrofotometer der Fa. Lange, DE.

Bei den angegebenen Allophanatisierungsgraden (prozentualer Anteil der zu Allophanatgruppen umgesetzten, aus den Hydroxylgruppen der Komponente B) sich intermediär bildenden Urethangruppen) sowie den molaren Isocyanurat-/ Allophanatgruppen-Verhältnissen handelt es sich um aus den 13C-NMR-Daten berechnete Werte.

Die Glasübergangstemperatur Tg wurde mittels DSC (Differential Scanning Calorimetrie) mit einem Mettler DSC 12E (Mettler Toledo GmbH, Giessen, DE) bei einer Aufheizgeschwindigkeit von 10 °C/min bestimmt.

Shore-Härten wurden nach DIN 53505 mit Hilfe eines Shore-Härteprüfgerätes Zwick 3100 (Fa. Zwick, DE) gemessen.

CIE-Lab Werte (DIN 6174), Yellowness Index (ASTM E 313) und Transmission-Messungen wurden mit einem Spektralphotometer vom Typ Lambda 900 mit Integrationskugel (150 mm) der Fa. Perkin- Elmer, USA (0°/diffus, Referenz: Luft T=100%) durchgeführt.

Die Xenon-Belichtungen erfolgte nach DIN EN ISO 11431 in einem Suntest CPS (Firma Atlas, USA) mit Suprax Tages-Lichtfilter (UV-Kante bei 290 nm, Schwarztafel-Temperatur (STT) = 48°C). Als Maß für Farbton-Veränderungen wurden CIE-Lab und ΔE-Werte ermittelt.

### Herstellung der Ausgangsverbindungen

### Polyisocyanat A1)

### Herstellung eines Polyesterdiols B1)

In einem mit Stickstoff gespülten Kessel wurden 5730 g (50,3 mol) ε-Caprolacton, 1270 g (10,8 mol) 1,6-Hexandiol und 0,35 g Zinn(II)-2-ethylhexanoat unter Rühren für 4 Stunden auf 160 °C erhitzt. Nach Abkühlen auf Raumtemperatur lag ein flüssiges Polyesterdiol mit folgenden Kenndaten vor:

| | | |
|---|---|---|
| Viskosität (23 °C): | 330 mPas | |
| OH-Zahl: | 172,4 mg KOH | |
| Säurezahl: | 0,6 mg KOH | |
| Farbzahl (APHA): | 30 Hazen | |
| Mittleres Molekulargewicht: | 650 g/mol | (aus OH-Zahl berechnet) |

### Herstellung des Polyisocyanates A1)

1596 g (9,5 mol) Hexamethylendiisocyanat (HDI) wurden bei einer Temperatur von 90 - 100°C unter trockenem Stickstoff mit 650 g (1,0 mol) des vorstehend beschriebenen Polyesterdiols B1) versetzt und 3 Stunden gerührt, bis ein NCO-Gehalt von 31,8 %, entsprechend einer vollständigen Urethanisierung, erreicht war. Nach Abkühlen des Reaktionsgemisches auf 65°C wurde durch kontinuierliches Zudosieren von 15 ml einer 0,75 %-igen Lösung von N,N,N-Trimethyl-N-benzylammoniumhydroxid in einem 1:1-Gemisch von 2-Ethylhexanol und 2-Ethylhexan-1,3-diol über einen Zeitraum von 90 min die Allophanatisierungsreaktion und gleichzeitig eine Trimerisierung initiiert. Nach dieser Zeit betrug der NCO-Gehalt des Reaktionsgemisches 22,8 %. Der Katalysator wurde durch Zugabe von 0,5 g einer 10 %-igen Dibutylphosphat-Lösung in HDI deaktiviert und das nicht umgesetzte monomere HDI bei einer Temperatur von 130°C und einem Druck von 0,1 mbar im Dünnschichtverdampfer abgetrennt. Man erhielt 1630 g eines viskosen, farblosen Allophanat- und Isocyanuratgruppen enthaltenden Polyisocyanates mit folgenden Kenndaten:

| | |
|---|---|
| NCO-Gehalt: | 11,5 % |
| NCO-Funktionalität (ber.): | ca. 3,7 |
| Viskosität (23 °C): | 7200 mPas |
| monomeres HDI: | 0,07 % |
| Farbzahl (APHA): | 30 Hazen |
| Allophanatisierungsgrad: | 68 % |
| Isocyanurat- / Allophanatgruppen: | 35 : 65 (molar) |

### Polyisocyanat A2)

### Herstellung eines Polyesterdiols B2)

1160 g (9,8 mol) 1,6-Hexandiol, 1334 g Neopentylglykol (12,8) und 2662 g (18,2 mol) Adipinsäure wurden zusammen in einen Reaktor, der mit Rührer, Heizung, automatischer Temperatursteuerung, Stickstoffeinleitung, Kolonne, Wasserabscheider und Vorlage ausgerüstet war, eingewogen und unter Rühren und Durchleiten von Stickstoff so auf 200°C aufgeheizt, dass die Kopftemperatur an der Kolonne 103°C nicht überstieg. Nach beendeter Destillation der theoretisch berechneten Menge des Reaktionswassers (656 g) wurde der Wasserabscheider durch eine Destillationsbrücke ersetzt und die Reaktionsmischung so lange bei 200°C gerührt, bis die Kopftemperatur der Kolonne auf unter 90°C gesunken war. Die Kolonne wurde entfernt und das Produkt wurde bis zu einer Säurezahl von ≤ 2 mg KOH/g weiter kondensiert. Man erhielt ein bei Raumtemperatur flüssiges Polyesterdiol mit folgenden Kenndaten.

| | | |
|---|---|---|
| Viskosität (23 °C): | 4065 mPas | |
| OH-Zahl: | 89 mg KOH/g | |
| Säurezahl: | 1,5 mg KOH/g | |
| Farbzahl (APHA): | 16 Hazen | |
| Mittleres Molekulargewicht: | 1260 g/mol | (aus OH-Zahl berechnet) |

### Herstellung des Polyisocyanates A2)

Nach dem für Ausgangspolyisocyanat A1) beschriebenen Verfahren und unter Verwendung der dort beschriebenen Katalysatorlösung wurden 672 g (4 mol) HDI und 177 g (0,14 mol) des Polyesterdiols B2) bis zu einem NCO-Gehaltes von 33,5 % umgesetzt. Nach Deaktivierung des Katalysators und anschließender destillativer Entfernung des nicht umgesetzten monomeren HDI mit Hilfe eines Kurzwegverdampfers bei 130°C und 0,1 mbar erhielt man 365 g eines viskosen, farblosen Allophanat- und Isocyanauratgruppen enthaltenden Polyisocyanates mit folgenden Kenndaten:

| | |
|---|---|
| NCO-Gehalt: | 11,3 % |
| NCO-Funktionalität (ber.): | ca. 3,7 |
| Viskosität (23 °C): | 7850 mPas |
| monomeres HDI: | 0,05 % |
| Farbzahl (APHA): | 27 Hazen |
| Allophanatisierungsgrad: | 69 % |
| Isocyanurat- / Allophanatgruppen: | 32 : 68 |

### Polyisocyanat A3)

Nach dem für Ausgangspolyisocyanat A1) beschriebenen Verfahren und unter Verwendung der dort beschriebenen Katalysatorlösung wurden 588 g (3,5 mol) HDI und 278 g (0,37 mol) eines kommerziell verfügbaren Poly-ε-Caprolactondiols (CAPA® 2077 A der Fa. Perstorp, Schweden; mittleres Molekulargewicht 750) bis zu einem NCO-Gehaltes von 23,7 % umgesetzt. Nach Deaktivierung des Katalysators und anschließender destillativer Entfernung des nicht umgesetzten monomeren HDI mit Hilfe eines Kurzwegverdampfers bei 130°C und 0,1 mbar erhielt man 369 g eines viskosen, farblosen Allophanat- und Isocyanauratgruppen enthaltenden Polyisocyanates mit folgenden Kenndaten:

| | |
|---|---|
| NCO-Gehalt: | 11,2 % |
| NCO-Funktionalität (ber.): | ca. 3,8 |
| Viskosität (23 °C): | 6300 mPas |
| monomeres HDI: | 0,05 % |
| Farbzahl (APHA): | 27 Hazen |
| Allophanatisierungsgrad: | 68 % |
| Isocyanurat-/Allophanatgruppen: | 20 : 80 |

### Polyisocyanat A4)

756 g (4,5 mol) HDI wurden bei einer Temperatur von 90 - 100°C unter trockenem Stickstoff mit 181 g (0,24 mol) des bei der Herstellung von Ausgangspolyisocyanat A3) beschriebenen, kommerziell verfügbaren Poly-ε-Caprolactondiols (CAPA® 2077 A) versetzt und 3 Stunden gerührt, bis ein NCO-Gehalt von 38,2 %, entsprechend einer vollständigen Urethanisierung, erreicht war. Anschließend wurde das Reaktionsgemisch auf 95°C aufgeheizt und 0,2 g Zink(II)-2-ethyl-1-hexanoat als Allophanatisierungskatalysator zugegeben. Aufgrund der exotherm einsetzenden Reaktion stieg die Temperatur der Mischung bis auf 110°C an. Nach ca. 30 min betrug der NCO-Gehalt des Reaktionsgemisches 34,8 %. Der Katalysator wurde durch Zugabe von 0,2 g Benzoylchlorid deaktiviert und das nicht umgesetzte monomere HDI bei einer Temperatur von 130°C und einem Druck von 0,1 mbar im Dünnschichtverdampfer abgetrennt. Man erhielt 388 g eines viskosen, farblosen Allophanat- und Isocyanauratgruppen enthaltenden Polyisocyanates mit folgenden Kenndaten:

| | |
|---|---|
| NCO-Gehalt: | 11,3 % |
| NCO-Funktionalität (ber.): | ca. 3,7 |
| Viskosität (23 °C): | 6500 mPas |
| monomeres HDI: | 0,07 % |
| Farbzahl (APHA): | 47 Hazen |
| Allophanatisierungsgrad: | 93 % |
| Isocyanurat- / Allophanatgruppen: | 18 : 82 |

### Vergleichspolyisocyanat V1)

756g (4,5 mol) HDI wurden unter trockenem Stickstoff mit 100 ppm Zirkonium(II)-2-ethylhexanoat als Allophanatisierungskatalysator bei 110°C vorgelegt und innerhalb von 1,5 Stunden mit 181g (0,24 mol) des bei der Herstellung von Ausgangspolyisocyanat A3) beschriebenen, kommerziell verfügbaren Poly-ε-Caprolactondiols (CAPA® 2077 A) versetzt. Nach weiteren 3 Stunden bei 110°C betrug der NCO-Gehalt des Reaktionsgemisches 35,9 %. Der Katalysator wurde durch Zugabe von 250 ppm Benzoylchlorid deaktiviert und das nicht umgesetzte monomere HDI bei einer Temperatur von 130°C und einem Druck von 0,1 mbar im Dünnschichtverdampfer abgetrennt. Man erhielt 350 g eines viskosen, farblosen Allophanatgruppen enthaltenden Polyisocyanates mit folgenden Kenndaten:

| | |
|---|---|
| NCO-Gehalt: | 11,8 % |
| NCO-Funktionalität (ber.): | ca. 3,9 |
| Viskosität (23 °C): | 3200 mPas |
| monomeres HDI: | 0,08 % |
| Farbzahl (APHA): | 33 Hazen |
| Allophanatisierungsgrad: | 98 % |
| Isocyanurat- / Allophanatgruppen: | 2 : 98 |

### Vergleichspolyisocyanat V2)

Isocyanuratgruppen enthaltendes HDI-Polyisocyanat (Desmodur® N 3300, Hersteller: Fa. Bayer MaterialScience, DE) mit folgenden Kenndaten:

| | |
|---|---|
| NCO-Gehalt: | 21,8 % |
| Viskosität (23 °C): | 3050 mPas |
| freies HDI: | 0,09 % |
| Farbzahl (APHA): | 8 Hazen |
| Allophanatisierungsgrad: | - |
| Isocyanurat- / Allophanatgruppen: | 100 : 0 |

### Hydroxyfunktioneller Reaktionspartner E1)

### Komponente a)

3112 g (34,6 mol) 1,3-Butandiol, 1863 g (17,9 mol) Neopentylglykol, 2568 g (19,2 mol) Trimethylolpropan und 6706 g (40,4 mol) Isophtalsäure wurden zusammen in einen Reaktor, der mit Rührer, Heizung, automatischer Temperatursteuerung, Stickstoffeinleitung, Kolonne, Wasserabscheider und Vorlage ausgerüstet war, eingewogen und unter Rühren und Durchleiten von Stickstoff so auf 200°C aufgeheizt, dass die Kopftemperatur an der Kolonne 102°C nicht überstieg. Nach beendeter Destillation der theoretisch berechneten Menge des Reaktionswassers (1649 g) wurde der Wasserabscheider durch eine Destillationsbrücke ersetzt und die Reaktionsmischung so lange bei 200°C gerührt, das Produkt einer Säurezahl von ≤ 5 mg KOH/g ausweißte. Man erhielt ein bei Raumtemperatur hochviskoses Polyesterpolyol mit folgenden Kenndaten:

| | | |
|---|---|---|
| Auslaufzeit (23°C): | 29 s | als 55 %ige Lösung in MPA (ISO 2431) |
| OH-Zahl: | 335 mg KOH/g | |
| Säurezahl: | 4,7 mg KOH/g | |
| Farbzahl (APHA): | 27 Hazen | |
| Mittleres Molekulargewicht: | 435 g/mol | (aus OH-Zahl berechnet) |

### Komponente b)

4034 g (35,4 mol) ε-Caprolacton, 9466 g (70,6 mol) Trimethylolpropan und 6,75g Zinn(II)-2-ethyl-hexanoat wurden unter trockenem Stickstoff vermischt und 4 Stunden auf 160°C erhitzt. Nach Abkühlen auf Raumtemperatur lag ein flüssiges Polyesterdiol mit folgenden Kenndaten.

| | | |
|---|---|---|
| Viskosität (23 °C): | 4600 mPas | |
| OH-Zahl: | 886 mg KOH/g | |
| Säurezahl: | 0,4 mg KOH/g | |
| Farbzahl (APHA): | 42 Hazen | |
| Mittleres Molekulargewicht: | 190 g/mol | (aus OH-Zahl berechnet) |

### Herstellung des hydroxyfunktionellen Reaktionspartners E1)

6300 g Komponente a), 6300 g Komponente b) und 1400 g Dipropylenglykol wurden in einem Rührkessel 1 Stunde bei 60°C mit einander gerührt. Man erhielt den hydroxyfunktionellen Reaktionspartner E1) mit folgenden Kenndaten:

| | | |
|---|---|---|
| Viskosität (23 °C): | 19900 mPas | |
| OH-Zahl: | 628 mg KOH/g | |
| Säurezahl: | 2,2 mg KOH/g | |
| Farbzahl (APHA): | 64 Hazen | |
| Mittleres Molekulargewicht: | 243 g/mol | (aus OH-Zahl berechnet) |

### Hydroxyfunktioneller Reaktionspartner E2)

Als Ausgangskomponente zur Herstellung des Polyisocyanates A1) beschriebenes Polyesterdiol B1).

### Beispiele 1 bis 7) (erfindungsgemäß und Vergleich)

### Herstellung von Vergussmassen

Zur Herstellung von Vergussmassen wurden Polyisocyanatkomponenten und Polyolkomponenten, gegebenenfalls unter Mitverwendung von DBTL als Katalysator, in den in Tabelle 1 angegebenen Kombinationen und Mengenverhältnissen (Gew.-Teile), jeweils entsprechend einem Äquivalentverhältnis von Isocyanatgruppen zu Hydroxylgruppen von 1 : 1, mit Hilfe eines Speed-Mixers DAC 150 FVZ (Firma Hauschild, DE) 1 Min bei 3500 U/Min homogenisiert und anschliessend von Hand in offene, nicht beheizte Polypropylen-Formen gegossen. Nach 30 Minuten Aushärtung bei Raumtemperatur bzw. bei 70°C in einem Trockenschrank wurden die Prüfkörper (Durchmesser 50 mm, Höhe 5 mm) entformt.

Nach einer Nachhärtezeit von 24 Stunden wurden die Prüfkörper auf ihre mechanischen und optischen Eigenschaften getestet. Für eine schnelle Bewertung der Wärmeformbeständikeit wurde die Shore-Härte einer auf 80°C erwärmten Probe gemessen und die Differenz zu der bei Raumtemperatur gemessenen Shore Härte der gleichen Probe berechnet. Die Chemikalien-Beständigkeit wurden die Proben bis zu 7 Tage in Aceton gelagert und visuell beurteilt und bewertet ("sehr gut" = keine sichtbare Veränderung nach 7 Tagen; "gut" = keine sichtbare Veränderung nach 1 Tag; "mäßig" = Probe nach 1 Tag angegriffen). Die Prüfergebnisse finden sich in Tabelle 1.

**Tabelle 1:**

| **Beispiel** | **1** | **2** | **3** | **4** | **5** | **6 (Vergleich)** | **7 (Vergleich)** |
|---|---|---|---|---|---|---|---|
| Polyisocyanat A1) | 80,4 | - | - | - | 52,4 | - | - |
| Polyisocyanat A2) | - | 79,8 | - | - | - | - | - |
| Polyisocyanat A3) | - | - | 80,0 | - | - | - | - |
| Polyisocyanat A4) | - | - | - | 80,6 | - | - | - |
| Vergleichspolyisocyanat V1) | - | - | - | - | - | 80,0 | - |
| Vergleichspolyisocyanat V2) | - | - | - | - | - | - | 68,4 |
| Polyol E1) | 19,6 | 19,2 | 19,0 | 19,4 | - | 20,0 | 31,6 |
| Polyol E2) | - | - | - | - | 46,6 | - | - |
| DBTL | - | 1,0 | 1,0 | - | 1,0 | - | - |
| Aushärtetemperatur [°C] | 70 | 25 | 25 | 70 | 25 | 70^{a)} | 70 |
| Tg[°C] | 7 | -2 | -5 | 12 | -33 | 10 | 92 |
| Shore-Härte A/D | 79/31 | 80/28 | 79/36 | 78/25 | 60/20 | 75/23 | -/84 |
| Δ Shore-Härte A (80°C) | -3% | -1% | -1% | -4% | -5% | -43% | -54% ^{b)} |
| Chemikalien-Beständigkeit | sehr gut | sehr gut | sehr gut | gut | gut | mäßig | gut |
| ΔE nach 400h Xenontest | 7,4 | 6,9 | 9,0 | 8,2 | 7,2 | 8,4 | 8,0 |

| | | | | | | | |
|---|---|---|---|---|---|---|---|
| ^{a)} Entformzeit 80 min ^{b)} Δ Shore-Härte D | | | | | | | |

Die Beispiele zeigen, dass erfindungsgemäß (Beispiele 1 bis 5) unter Verwendung von Polyisocyanaten, die durch Umsetzung von HDI mit molar unterschüssigen Mengen an Polyesteralkoholen unter Allophanatisierung und gleichzeitiger Trimerisierung hergestellt wurden, weiche, hoch elastische, lichtechte und chemikalienbeständige Polyurethanvergussmassen mit exzellenter Wärmeformbeständigkeit erhalten werden. Dagegen liefern Estergruppen enthaltende HDI-Polyisocyanate mit ausschließlich Allophanatstruktur (Beispiel 6, Vergleich) in analogen Rezepturen Polyurethanmassen mit schlechter Wärmeformbeständigkeit und unzureichender Chemikalienbeständigkeit, während die Verwendung allophanatgruppenfreier HDI-Polyisocyanurate (Beispiel 7, Vergleich) nicht zu weichen sondern sehr harten und spröden Vergussmassen führt.

### Beispiel 8)

Die Vergussmasse aus Beispiel 1 wurde mit Hilfe eines Labordosiergerätes unter den in der Tabelle 2 angegebenen Bedingungen in eine beheizbare Form (195 x 290 x 4 mm) gegossen.

**Tabelle 2: Verarbeitungsparameter**

| | |
|---|---|
| Polyisocyanat A1)^{a)} | 100 Gew.-Teile |
| Polyol E1)^{a)} | 24 Gew.-Teile |
| Formtemperatur | 70°C |
| Gießzeit (ca.) | ca. 360 s |
| Entformzeit (ca.) | ca. 35 min |
| Nachhärtung (Zeit/Temperatur) | 12 h / 65°C |

| | |
|---|---|
| ^{a)} Verarbeitungstemperatur jeweils 65°C | |

Aus so erhaltenen Musterplatten wurden Prüfkörper ausgeschnitten und weiteren mechanischen und thermischen Prüfungen unterworfen, deren Ergebnisse in Tabelle 3 und 4 aufgeführt sind.

**Tabelle 3: Mechanische Eigenschaften**

| | |
|---|---|
| Shore-Härte A/D | 79/26 |
| Dichte (DIN 53479) | 1,17 g/cm³ |
| Biege-Elastizitätsmodul (DIN ISO EN 178) | 13 N/mm² |
| Reißfestigkeit (Zugversuch, DIN 53504) | 6 MPa |
| Reißdehnung (Zugversuch, DIN 53504) | 74 % |
| Durchstoßversuch (mit Schmiermittel) (DIN EN ISO 6603-2) | 2300 N |
| Rückprallelastizität (DIN 53512) | 17 % |

**Tabelle 4: Thermische Eigenschaften**

| | |
|---|---|
| thermische Längenausdehung (2. Lauf) (TM900026) bevorzugter Messbereich: -20 bis 120°C | 186 · 10⁻⁶ 1/K |
| thermische Längenausdehung, 2. Lauf (ASTM E831) bevorzugter Messbereich bis 55°C | 203 · 10⁻⁶ 1/K |
| thermische Längenausdehung 2. Lauf (ASTM D696-91) bevorzugter Messbereich -30 bis 30°C | 155 · 10⁻⁶ 1/K |

### Beispiel 9)

Ein gemäß Beispiel 1 hergestellter Prüfkörper wurde bei einer Probentemperatur von 90 °C im Abstand von 2 mm einer weißen LED-Belichtung ausgesetzt. Tabelle 5 zeigt die Entwicklung der Transmission, des Farbtons (CIE-Lab Werte) und der Vergilbung (Yellowness Index YI) über den Belichtungszeitraum. Insbesondere die hohe und zeitlich unveränderte Transparenz (∼90% Transmission) sowie die geringe Vergilbung, belegen die hervorragende Eignung der erfindungsgemässen Polyisocyanate zur Herstellung elastischer Vergussmassen für die Verkapselung von Leuchtdioden.

**Tabelle 5:**

| **Belichtungszeit [h]** | **0** | **406** | **1936** |
|---|---|---|---|
| Ty[%](D6510°) | 89,21 | 89,80 | 89,14 |
| YI(D6510°) | 1,13 | 0,99 | 1,32 |
| L*(D6510°) | 95,67 | 95,91 | 95,64 |
| a*(D6510°) | -0,07 | -0,07 | -0,07 |
| b*(D6510°) | 0,63 | 0,55 | 0,71 |
| DeltaTy | - | 0,59 | -0,08 |
| DeltaYI | - | -0,14 | 0,19 |

## Patentansprüche

1. Verwendung von Polyisocyanatkomponenten A) mit einem molaren Verhältnis von oligomeren Strukturen zu Allophanatgruppen von 10 : 90 bis 60 : 40, die durch Umsetzung von 1,6-Diisocyanatohexan mit molar unterschüssigen Mengen einer Estergruppen aufweisenden hydroxyfunktionellen Komponente B) in Gegenwart von Katalysatoren C), die die Allophanatisierung und gleichzeitig die Oligomerisierung von Isocyanatgruppen beschleunigen, Abbruch der Reaktion bei einem gewünschten Umsatzgrad und Entfernung des nicht umgesetzten Diisocyanatüberschusses erhältlich sind, zur Herstellung lichtechter kompakter oder geschäumter Polyurethan- und/oder Polyharnstoff-Formteile unter Einhaltung eines Äquivalentverhältnisses von Isocyanatgruppen zu gegenüber Isocyanaten reaktiven Gruppen von 0,5 : 1 bis 2,0:1.

2. Verwendung gemäß Anspruch I, **dadurch gekennzeichnet, dass** die Polyisocyanatkomponenten A) unter Verwendung einer Estergruppen aufweisenden hydroxyfunktionellen Komponente B) hergestellt werden, die ein mittleres, aus Funktionalität und Hydroxylzahl berechenbares Molekulargewicht von 134 bis 3000, und eine mittlere OH-Funktionalität von 1,8 bis 4,0 aufweist.

3. Verwendung gemäss Anspruch 1, **dadurch gekennzeichnet, dass** die Polyisocyanatkomponenten A) unter Verwendung eines durch ringöffnende Polymerisation von ε-Caprolacton erhaltenen Polyesterdiols B) hergestellt werden.

4. Verwendung gemäß Anspruch 1, **dadurch gekennzeichnet, dass** die Polyisocyanatkomponenten A) durch Umsetzung von 1,6-Diisocyanatohexan mit einer einer Estergruppen aufweisenden hydroxyfunktionellen Komponente B) unter Einhaltung eines Äquivalentverhältnisses von Isocyanatgruppen zu Hydroxylgruppen von 4 : 1 bis 50 : 1 hergestellt werden.

5. Verwendung gemäß Anspruch 1, **dadurch gekennzeichnet, dass** die monomerarmen Polyisocyanatkomponenten A) unter Verwendung von Zinkcarboxylaten als Katalysatoren C) hergestellt werden.

6. Verwendung gemäß Anspruch 1, **dadurch gekennzeichnet, dass** die monomerarmen Polyisocyanatkomponenten A) unter Verwendung von Zink-(II)-n-octanoat, Zink-(II)-2-ethyl-1-hexanoat und/oder Zink-(II)-stearat als Katalysatoren C) hergestellt werden.

7. Verwendung gemäß Anspruch 1, **dadurch gekennzeichnet, dass** die Polyisocyanatkomponenten A) unter Verwendung quaternärer Ammoniumcarboxylate, quaternärer Ammoniumhydroxide und/oder quaternärer Ammonium- oder Phosphoniumhydrogenpolyfluoride als Katalysatoren C) hergestellt werden.

8. Verwendung gemäß Anspruch 7, **dadurch gekennzeichnet, dass** die monomerarmen Polyisocyanatkomponenten A) unter Verwendung von N,N, N-Trimethyl-N-(2-hydroxyethyl)-ammoniumhydroxid, N, N, N-Trimethyl-N(2-hydroxypropyl)-ammoniumhydroxid, N,N,N-Trimethyl-N-(2-hydroxybutyl)ammoniumhydroxid und/oder N,N,N-Trimethyl-N-benzylammoniumhydroxid als Katalysatoren C) hergestellt werden.

9. Verwendung gemäß Anspruch 1, **dadurch gekennzeichnet, dass** die monomerarmen Polyisocyanatkomponenten A) unter Verwendung tertiärer Phosphine als Katalysatoren C) hergestellt werden.

10. Verwendung gemäß Anspruch 9, **dadurch gekennzeichnet, dass** die monomerarmen Polyisocyanatkomponenten A) unter Verwendung von Tributylphosphin, Trioctylphosphin und/- oder Dicyclopentylbutylphosphin als Katalysatoren C) hergestellt werden.

11. Verwendung gemäß Anspruch 1 , **dadurch gekennzeichnet, dass** bei der Herstellung der monomerarmen Polyisocyanatkomponenten A) die Umsetzung von 1,6-Diisocyanatohexan mit der Estergruppen aufweisenden hydroxytunktionellen Komponente B) bei einem gewünschten Umsatzgrad durch Zugabe eines Abstoppers abgebrochen wird.

12. Verwendung gemäß Anspruch 1, **dadurch gekennzeichnet, dass** bei der Herstellung der Polyisocyanatkomponenten A) das nicht umgesetzte monomere I ,6-Diisocyanatohexan durch Extraktion oder Dünnschichtdestillation vom Reaktionsprodukt abgetrennt wird.

13. Verwendung gemäß Anspruch I, **dadurch gekennzeichnet, dass** es sich bei den Polyurethan und/oder Polyharnstoff-Formteilen um optische, optoelektronische oder elektronische Bauteile handelt.

14. Verwendung gemäß Anspruch 13, **dadurch gekennzeichnet, dass** es sich bei den Bauteilen um Leuchtdioden handelt.

15. Verwendung gemäß Anspruch 13, **dadurch gekennzeichnet, dass** es sich bei den Bauteilen um Solarmodule handelt.

16. Verwendung gemäß Anspruch 1 , **dadurch gekennzeichnet, dass** es sich bei den Polyurethan- und/oder Polyharnstoff-Formteilen um Dichtungen oder Dämpfungselemente handelt.

17. Verwendung gemäß Anspruch 1 , **dadurch gekennzeichnet, dass** es sich bei den Polyurehan- und/oder Polyharnstoff-Formteilen um weiche Integralschäumformteile handelt.

18. Verfahren zur Herstellung lichtechter Polyurethan- und/oder Polyharnstoff-Formteile durch lösemittelfreie Umsetzung in offenen oder geschlossenen Formen von
A) einer Polyisocyanatkomponente mit einem molaren Verhältnis von oligomeren Strukturen zu Allophanatgruppen von 10 : 90 bis 60 : 40, erhältlich durch Umsetzung von 1,6-Diisocyanatohexan mit molar unterschüssigen Mengen einer Estergruppen aufweisenden hydroxyfunktionellen Komponente B) in Gegenwart von Katalysatoren C), die die Allophanatisierung und gleichzeitig die Oligomerisierung von Isocyanatgruppen beschleunigen, Abbruch der Reaktion bei einem gewünschten Umsatzgrad und Entfernung des nicht umgesetzten Diisocyanatüberschusses, gegebenenfalls gemeinsam mit
D) weiteren aliphatischen und/oder cycloaliphatischen Polyisocyanaten mit
E) gegenüber Isocyanatgruppen reaktiven Reaktionspartnern einer mittleren Funktionalität von 2,0 bis 6,0 und gegebenenfalls unter Mitverwendung
F) weiterer Hilfs- und Zusatzmittel,
unter Einhaltung eines Äquivalentverhältnisses von Isocyanatgruppen zu gegenüber Isocyanaten reaktiven Gruppen von 0,5 : 1 bis 2,0 : 1.

19. Verfahren gemäß Anspruch 18, **dadurch gekennzeichnet, dass** als Komponente E) hydroxy-, amino- und/oder mercaptofunktionelle Verbindungen eines mittleren Molekulargewichtes von 62 bis 12000 eingesetzt werden.

20. Verfahren gemäß Anspruch 18, **dadurch gekennzeichnet, dass** als Komponente E) Polyetherpolyole, Polyesterpolyole, Polycarbonatpolyole und/oder Aminopolyether eines mittleren Molekulargewichtes von 500 bis 12000, Polythioetherthiole, Polyesterthiole und/oder niedermolekulare hydroxy- und/oder aminofunktionelle Komponenten eines mittleren Molekulargewichtes von 62 bis 500 eingesetzt werden.

21. Verfahren gemäß Anspruch 18, **dadurch gekennzeichnet, dass** als Komponente F) Wasser als Treibmittel eingesetzt wird.

22. Verfahren gemäß Anspruch 18, **dadurch gekennzeichnet, dass** die Umsetzung der Reaktionspartner bei einer Temperatur von bis zu 160° C und einem Druck von bis zu 300 bar durchgeführt wird.

## Claims

1. Use of polyisocyanate components A) which have a molar ratio of oligomeric structures to allophanate groups of 10 : 90 to 60 : 40 and can be obtained by reacting 1,6-diisocyanatohexane with amounts in molar deficit of an ester group-containing hydroxy-functional component B) in the presence of catalysts C) which accelerate the allophanatisation and the simultaneous oligomerisation of isocyanate groups, and by terminating the reaction at a desired degree of conversion and removing the unreacted diisocyanate excess, for the production of lightfast compact or foamed polyurethane and/or polyurea articles while maintaining an equivalents ratio of isocyanate groups to isocyanate-reactive groups of 0.5 : 1 to 2.0 : 1.

2. Use according to claim 1, **characterised in that** the polyisocyanate components A) are produced using an ester group-containing hydroxy-functional component B) having an average molecular weight, calculable from the functionality and hydroxyl value, of 134 to 3000 and an average OH functionality of 1.8 to 4.0.

3. Use according to claim 1, **characterised in that** the polyisocyanate components A) are produced using a polyester diol B) obtained by ring-opening polymerisation of ε-caprolactone.

4. Use according to claim 1, **characterised in that** the polyisocyanate components A) are produced by reacting 1,6-diisocyanatohexane with an ester group-containing hydroxy-functional component B) whilst maintaining an equivalents ratio of isocyanate groups to hydroxyl groups of 4:1 to 50:1.

5. Use according to claim 1, **characterised in that** the low-monomer polyisocyanate components A) are produced using zinc carboxylates as catalysts C).

6. Use according to claim 1, **characterised in that** the low-monomer polyisocyanate components A) are produced using zinc(II)-n-octanoate, zinc(II)-2-ethyl-1-hexanoate and/or zinc(II) stearate as catalysts C).

7. Use according to claim 1, **characterised in that** the polyisocyanate components A) are produced using quaternary ammonium carboxylates, quaternary ammonium hydroxides and/or quaternary ammonium or phosphonium hydrogen polyfluorides as catalysts C).

8. Use according to claim 7, **characterised in that** the low-monomer polyisocyanate components A) are produced using N,N,N-trimethyl-N-(2-hydroxyethyl) ammonium hydroxide, N,N,N-trimethyl-N-(2-hydroxypropyl) ammonium hydroxide, N,N,N-trimethyl-N-(2-hydroxybutyl) ammonium hydroxide and/or N,N,N-trimethyl-N-benzyl ammonium hydroxide as catalysts C).

9. Use according to claim 1, **characterised in that** the low-monomer polyisocyanate components A) are produced using tertiary phosphines as catalysts C).

10. Use according to claim 9, **characterised in that** the low-monomer polyisocyanate components A) are produced using tributylphosphine, trioctylphosphine and/or dicyclopentylbutylphosphine as catalysts C).

11. Use according to claim 1, **characterised in that** in the production of low-monomer polyisocyanate components A) the reaction of 1,6-diisocyanatohexane with the ester group-containing hydroxy-functional component B) is terminated at a desired degree of conversion by addition of a stopper.

12. Use according to claim 1, **characterised in that** in the production of polyisocyanate components A) the unreacted monomeric 1,6-diisocyanatohexane is separated from the reaction product by extraction or thin-film distillation.

13. Use according to claim 1, **characterised in that** the polyurethane and/or polyurea articles are optical, optoelectronic or electronic components.

14. Use according to claim 13, **characterised in that** the components are light-emitting diodes.

15. Use according to claim 13, **characterised in that** the components are solar modules.

16. Use according to claim 1, **characterised in that** the polyurethane and/or polyurea articles are seals or damping elements.

17. Use according to claim 1, **characterised in that** the polyurethane and/or polyurea articles are flexible integral foam articles.

18. Process for the production of lightfast polyurethane and/or polyurea articles by solvent-free reaction in open or closed forms of
A) a polyisocyanate component which has a molar ratio of oligomeric structures to allophanate groups of 10 : 90 to 60 : 40 and can be obtained by reacting 1,6-diisocyanatohexane with amounts in molar deficit of an ester group-containing hydroxy-functional component B) in the presence of catalysts C) which accelerate the allophanatisation and the simultaneous oligomerisation of isocyanate groups, and by terminating the reaction at a desired degree of conversion and removing the unreacted diisocyanate excess, optionally together with
D) further aliphatic and/or cycloaliphatic polyisocyanates,
with
E) reaction partners having an average functionality of 2.0 to 6.0 which are reactive to isocyanate groups, and optionally with incorporation of
F) further auxiliary agents and additives,
while maintaining an equivalents ratio of isocyanate groups to isocyanate-reactive groups of 0.5 : 1 to 2.0 : 1.

19. Process according to claim 18, **characterised in that** hydroxy-, amino- and/or mercapto-functional compounds having an average molecular weight of 62 to 12,000 are used as component E).

20. Process according to claim 18, **characterised in that** polyether polyols, polyester polyols, polycarbonate polyols and/or amino polyethers having an average molecular weight of 500 to 12,000, polythioether thiols, polyester thiols and/or low-molecular-weight hydroxy- and/or amino-functional components having an average molecular weight of 62 to 500 are used as component E).

21. Process according to claim 18, **characterised in that** water as a blowing agent is used as component F).

22. Process according to claim 18, **characterised in that** the reaction of the reaction partners is performed at a temperature of up to 160°C and under a pressure of up to 300 bar.

## Revendications

1. Utilisation de composants polyisocyanate A) ayant un rapport molaire entre les structures oligomères et les groupes allophanate de 10:90 à 60:40, qui peuvent être obtenus par mise en réaction de 1,6-diisocyanatohexane avec des quantités en déficit molaire d'un composant B) à fonction hydroxy comprenant des groupes ester en présence de catalyseurs C), qui accélèrent l'allophanatisation et simultanément l'oligomérisation de groupes isocyanate, interruption de la réaction à un degré de conversion souhaité et élimination de l'excès de diisocyanate non réagi, pour la fabrication de pièces moulées en polyuréthane et/ou polyurée compactes ou expansées résistantes à la lumière, en maintenant un rapport équivalent entre les groupes isocyanate et les groupes réactifs avec les isocyanates de 0,5:1 à 2,0:1.

2. Utilisation selon la revendication 1, **caractérisée en ce que** les composants polyisocyanate A) sont fabriqués en utilisant un composant B) à fonction hydroxy comprenant des groupes ester qui présente un poids moléculaire moyen, pouvant être calculé à partir de la fonctionnalité et de l'indice hydroxyle, de 134 à 3 000, et une fonctionnalité OH moyenne de 1,8 à 4,0.

3. Utilisation selon la revendication 1, **caractérisée en ce que** les composants polyisocyanate A) sont fabriqués en utilisant un polyester-diol B) obtenu par polymérisation par ouverture de cycle d'ε-caprolactone.

4. Utilisation selon la revendication 1, **caractérisée en ce que** les composants polyisocyanate A) sont fabriqués par mise en réaction de 1,6-diisocyanatohexane avec un composant B) à fonction hydroxy comprenant des groupes ester en maintenant un rapport équivalent entre les groupes isocyanate et les groupes hydroxyle de 4:1 à 50:1.

5. Utilisation selon la revendication 1, **caractérisée en ce que** les composants polyisocyanate A) pauvres en monomères sont fabriqués en utilisant des carboxylates de zinc en tant que catalyseurs C).

6. Utilisation selon la revendication 1, **caractérisée en ce que** les composants polyisocyanate A) pauvres en monomères sont fabriqués en utilisant du n-octanoate de zinc (II), du 2-éthyl-1-hexanoate de zinc (II) et/ou du stéarate de zinc (II) en tant que catalyseurs C).

7. Utilisation selon la revendication 1, **caractérisée en ce que** les composants polyisocyanate A) sont fabriqués en utilisant des carboxylates d'ammonium quaternaires, des hydroxydes d'ammonium quaternaires et/ou des hydrogéno-polyfluorures d'ammonium ou de phosphonium quaternaires en tant que catalyseurs C).

8. Utilisation selon la revendication 7, **caractérisée en ce que** les composants polyisocyanate A) pauvres en monomères sont fabriqués en utilisant de l'hydroxyde de N,N,N-triméthyl-N-(2-hydroxyéthyl)-ammonium, de l'hydroxyde de N,N,N-triméthyl-N-(2-hydroxypropyl)-ammonium, de l'hydroxyde de N,N,N-triméthyl-N-(2-hydroxybutyl)-ammonium et/ou de l'hydroxyde de N,N,N-triméthyl-N-benzylammonium en tant que catalyseurs C).

9. Utilisation selon la revendication 1, **caractérisée en ce que** les composants polyisocyanate A) pauvres en monomères sont fabriqués en utilisant des phosphines tertiaires en tant que catalyseurs C).

10. Utilisation selon la revendication 9, **caractérisée en ce que** les composants polyisocyanate A) pauvres en monomères sont fabriqués en utilisant de la tributylphosphine, de la trioctylphosphine et/ou de la dicyclopentylbutylphosphine en tant que catalyseurs C).

11. Utilisation selon la revendication 1, **caractérisée en ce que**, lors de la fabrication des composants polyisocyanate A) pauvres en monomères, la réaction de 1,6-diisocyanatohexane avec le composant B) à fonction hydroxy comprenant des groupes ester est interrompue à un degré de conversion souhaité par ajout d'un agent d'arrêt.

12. Utilisation selon la revendication 1, **caractérisée en ce que**, lors de la fabrication des composants polyisocyanate A), le 1,6-diisocyanatohexane monomère non réagi est séparé du produit de réaction par extraction ou distillation en couche mince.

13. Utilisation selon la revendication 1, **caractérisée en ce que** les pièces moulées en polyuréthane et/ou en polyurée sont des composants optiques, optoélectroniques ou électroniques.

14. Utilisation selon la revendication 13, **caractérisée en ce que** les composants sont des diodes électroluminescentes.

15. Utilisation selon la revendication 13, **caractérisée en ce que** les composants sont des modules solaires.

16. Utilisation selon la revendication 1, **caractérisée en ce que** les pièces moulées en polyuréthane et/ou polyurée sont des joints ou des éléments d'amortissement.

17. Utilisation selon la revendication 1, **caractérisée en ce que** les pièces moulées en polyuréthane et/ou polyurée sont des pièces moulées en mousse intégrale souple.

18. Procédé de fabrication de pièces moulées en polyuréthane et/ou polyurée résistantes à la lumière par mise en réaction sans solvant dans des moules ouverts ou fermés de :
A) un composant polyisocyanate ayant un rapport molaire entre les structures oligomères et les groupes allophanate de 10:90 à 60:40, qui peut être obtenu par mise en réaction de 1,6-diisocyanatohexane avec des quantités en déficit molaire d'un composant B) à fonction hydroxy comprenant des groupes ester en présence de catalyseurs C), qui accélèrent l'allophanatisation et simultanément l'oligomérisation de groupes isocyanate, interruption de la réaction à un degré de conversion souhaité et élimination de l'excès de diisocyanate non réagi, éventuellement conjointement avec
D) d'autres polyisocyanates aliphatiques et/ou cycloaliphatiques,
avec
E) des partenaires de réaction réactifs avec les groupes isocyanate ayant une fonctionnalité moyenne de 2,0 à 6,0, et éventuellement en utilisant
F) d'autres adjuvants et additifs,
en maintenant un rapport équivalent entre les groupes isocyanate et les groupes réactifs avec les isocyanate de 0,5:1 à 2,0:1.

19. Procédé selon la revendication 18, **caractérisé en ce que** des composés à fonction hydroxy, amino et/ou mercapto ayant un poids moléculaire moyen de 62 à 12 000 sont utilisés en tant que composant E).

20. Procédé selon la revendication 18, **caractérisé en ce que** des polyéther-polyols, des polyester-polyols, des polycarbonate-polyols et/ou des aminopolyéthers ayant un poids moléculaire moyen de 500 à 12 000, des polythioéther-thiols, des polyester-thiols et/ou des composants à fonction hydroxy et/ou amino de faible poids moléculaire ayant un poids moléculaire moyen de 62 à 500 sont utilisés en tant que composant E).

21. Procédé selon la revendication 18, **caractérisé en ce que** de l'eau est utilisée en tant que composant F) en tant qu'agent gonflant.

22. Procédé selon la revendication 18, **caractérisé en ce que** la réaction des partenaires de réaction est réalisée à une température de jusqu'à 160 °C et à une pression de jusqu'à 300 bar.
